# EUROPEAN PATENT APPLICATION

(11) **EP 4 611 452 A1**
(43) Date of publication of application: **03.09.2025**
(21) Application number: 23881752.2
(22) Date of filing: 20.10.2023
(51) Int. Cl.: H04W 72/04

(54) **METHOD AND APPARATUS FOR DETERMINING GUARD PERIOD**

(30) Priority: 24.10.2022 CN 202211305689
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); GAO, Xuejuan, Beijing 100085 (CN); XING, Yanping, Beijing 100085 (CN)
(74) Representative: Studio Torta S.p.A.
(86) International application number: PCT/CN2023/125658
(87) International publication number: WO 2024/088174

(57) **Abstract**

Embodiments of the present disclosure provide a method and apparatus for determining a guard period. The method applied to a terminal device comprises: determining the guard period on the basis of first information, wherein the first information is used for indicating, on the basis of a first frequency domain unit, a frequency domain resource corresponding to the guard period and/or indicating a time domain resource corresponding to the guard period, and a frequency domain width of the first frequency domain unit is less than a bandwidth part (BWP).

## Description

### CROSS-REFERENCES TO RELATED APPLICATIONS

The present application claims priority to Chinese patent application No. 202211305689.X filed on October 24, 2022, entitled "Method and Apparatus for Determining Guard Period", which is hereby incorporated by reference in its entirety.

### FIELD

The present application relates to the field of communications, and in particular, to methods and apparatuses for guard period determination.

### BACKGROUND

For a long term evolution (LTE) time domain duplex (TDD) system, uplink and downlink switching time is reserved through a displayed guard period (GP), and a frequency domain range of the GP spans an entire carrier.

For a new radio (NR) TDD system, a base station reserves a GP by configuring a "flexible symbol". The "flexible symbol" is configured based on a bandwidth part (BWP), that is, a frequency domain range of the "flexible symbol" spans an entire BWP.

### BRIEF SUMMARY

Embodiments of the present application provide methods and apparatuses for guard period determination, to solve a defect of resource waste in a traditional guard period design, reduce guard period overhead, and improve resource utilization.

An embodiment of the present application provides a method for guard period determination, performed by a terminal device, including:
determining a guard period based on first information,
where the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part (BWP).

In any one of the embodiments of the present application, the first information is used to indicate the time domain resource corresponding to the guard period based on the time domain resource corresponding to the first frequency domain unit.

In any one of the embodiments of the present application, the first frequency domain unit includes any one of the following:
a resource block (RB);
a resource block (RB) group, where the RB group is composed of multiple RBs; or
a subband.

In any one of the embodiments of the present application, the first information includes any one of the following:
RB starting position information and RB length information;
RB group starting position information and RB group length information;
bitmap information used to identify a frequency domain position; or
subband frequency domain position information.

In any one of the embodiments of the present application, the time domain resource includes a time domain length and/or a time domain position.

In any one of the embodiments of the present application, the method includes:
in case that the first information includes a first rule and subcarrier spacing information, determining the guard period based on the first information includes: determining a time domain length corresponding to the guard period based on the first rule and subcarrier spacing, where the subcarrier spacing is determined based on the subcarrier spacing information; or
in case that the first information includes time domain length information, determining the guard period based on the first information includes: determining a time domain length corresponding to the guard period based on the time domain length information.

In any one of the embodiments of the present application, the first rule is a mapping relationship between the time domain length and the subcarrier spacing.

In any one of the embodiments of the present application, the method includes:
in case that the first information includes a time domain position of a given guard period, determining the guard period based on the first information includes: determining the time domain position of the given guard period as a time domain position of the guard period; or
in case that the first information includes time domain position information, determining the guard period based on the first information includes: determining a time domain position indicated by the time domain position information as a time domain position of the guard period.

In any one of the embodiments of the present application, the time domain position of the guard period is any one of the following:
last M time units of a full downlink resource; or
first K time units of an uplink subband; or
P time units between a full downlink resource and an uplink subband,
where M, K and P are time domain lengths of the guard period, and M, K and P are integers greater than 0.

In any one of the embodiments of the present application, the method further includes:
receiving scheduling information sent from a network device and used to indicate a first resource, where the first resource is used for a first data transmission; and
determining, based on the guard period and the scheduling information, whether a resource conflict exists between the first resource and a resource corresponding to the guard period, and performing a first operation in case that the resource conflict exists.

In any one of the embodiments of the present application, the first operation includes any one of the following:
discarding the first data transmission;
delaying sending the first data transmission;
delaying receiving the first data transmission; or
performing rate matching on the first data transmission for the resource corresponding to the guard period.

An embodiment of the present application further provides a method for guard period determination, performed by a network device, including:
determining a guard period;
determining first information based on the guard period; and
sending the first information to a terminal device,
where the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part (BWP).

In any one of the embodiments of the present application, the first information is used to indicate the time domain resource corresponding to the guard period based on the time domain resource corresponding to the first frequency domain unit.

In any one of the embodiments of the present application, the first frequency domain unit includes any one of the following:
a resource block (RB);
a resource block (RB) group, where the RB group is composed of multiple RBs; or
a subband.

In any one of the embodiments of the present application, the first information includes any one of the following:
RB starting position information and RB length information;
RB group starting position information and RB group length information;
bitmap information used to identify a frequency domain position; or
subband frequency domain position information.

In any one of the embodiments of the present application, the time domain resource includes a time domain length and/or a time domain position.

In any one of the embodiments of the present application, the first information includes time domain length information or subcarrier spacing information,
where the time domain length information is used to determine a time domain length corresponding to the guard period, the subcarrier spacing information is used to determine subcarrier spacing, and the subcarrier spacing is used for the terminal device to determine the time domain length corresponding to the guard period based on a first rule.

In any one of the embodiments of the present application, the first rule is a mapping relationship between the time domain length and the subcarrier spacing.

In any one of the embodiments of the present application, determining the guard period includes:
determining a time domain position of a given guard period as a time domain position of the guard period.

In any one of the embodiments of the present application, the time domain position of the guard period includes any one of the following:
last M time units of a full downlink resource; or
first K time units of an uplink subband; or
P time units between a full downlink resource and an uplink subband,
where M, K and P are time domain lengths of the guard period, and M, K and P are integers greater than 0.

In any one of the embodiments of the present application, the method further includes:
determining whether a resource conflict exists between a first resource used for a first data transmission and a resource corresponding to the guard period, and performing a second operation in case that the resource conflict exists.

In any one of the embodiments of the present application, the second operation includes:
discarding the first data transmission;
delaying sending the first data transmission;
delaying receiving the first data transmission; or
performing rate matching on the first data transmission for the resource corresponding to the guard period.

An embodiment of the present application further provides an apparatus for guard period determination, for use in a terminal device, including:
a first determining unit, used for determining a guard period based on first information,
where the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part (BWP).

In any one of the embodiments of the present application, the first information is used to indicate the time domain resource corresponding to the guard period based on the time domain resource corresponding to the first frequency domain unit.

In any one of the embodiments of the present application, the first frequency domain unit includes any one of the following:
a resource block (RB);
a resource block (RB) group, where the RB group is composed of multiple RBs; or
a subband.

In any one of the embodiments of the present application, the first information includes any one of the following:
RB starting position information and RB length information;
RB group starting position information and RB group length information;
bitmap information used to identify a frequency domain position; or
subband frequency domain position information.

In any one of the embodiments of the present application, the time domain resource includes a time domain length and/or a time domain position.

In any one of the embodiments of the present application, the first determining unit is further used for, in case that the first information includes a first rule and subcarrier spacing information, determining a time domain length corresponding to the guard period based on the first rule and subcarrier spacing, where the subcarrier spacing is determined based on the subcarrier spacing information; or
the first determining unit is further used for, in case that the first information includes time domain length information, determining a time domain length corresponding to the guard period based on the time domain length information.

In any one of the embodiments of the present application, the first rule is a mapping relationship between the time domain length and the subcarrier spacing.

In any one of the embodiments of the present application, the first determining unit is further used for, in case that the first information includes a time domain position of a given guard period, determining a time domain position of the given guard period as a time domain position of the guard period; or
the first determining unit is further used for, in case that the first information includes time domain length information, determining a time domain length corresponding to the guard period based on the time domain length information.

In any one of the embodiments of the present application, the time domain position of the guard period is any one of the following:
last M time units of a full downlink resource; or
first K time units of an uplink subband; or
P time units between a full downlink resource and an uplink subband,
where M, K and P are time domain lengths of the guard period, and M, K and P are integers greater than 0.

In any one of the embodiments of the present application, the apparatus further includes:
a first receiving unit, used for receiving scheduling information sent from a network device and used to indicate a first resource, where the first resource is used for a first data transmission; and
where the first determining unit is further used for determining, based on the guard period and the scheduling information, whether a resource conflict exists between the first resource and a resource corresponding to the guard period, and performing a first operation in case that the resource conflict exists.

In any one of the embodiments of the present application, the apparatus further includes: a first operating unit,
where the first operating unit is used for performing a first operation including any one of the following:
discarding the first data transmission;
delaying sending the first data transmission;
delaying receiving the first data transmission; or
performing rate matching on the first data transmission for the resource corresponding to the guard period.

An embodiment of the present application further provides an apparatus for guard period determination, for use in a network device, including:
a second determining unit, used for determining a guard period,
where the second determining unit is further used for determining first information based on the guard period; and
a second sending unit, used for sending the first information to a terminal device,
where the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part (BWP).

In any one of the embodiments of the present application, the first information is used to indicate the time domain resource corresponding to the guard period based on the time domain resource corresponding to the first frequency domain unit.

In any one of the embodiments of the present application, the first frequency domain unit includes any one of the following:
a resource block (RB);
a resource block (RB) group, where the RB group is composed of multiple RBs; or
a subband.

In any one of the embodiments of the present application, the first information includes any one of the following:
RB starting position information and RB length information;
RB group starting position information and RB group length information;
bitmap information used to identify a frequency domain position; or
subband frequency domain position information.

In any one of the embodiments of the present application, the time domain resource includes a time domain length and/or a time domain position.

In any one of the embodiments of the present application, the first information includes time domain length information or subcarrier spacing information,
where the time domain length information is used to determine a time domain length corresponding to the guard period, the subcarrier spacing information is used to determine subcarrier spacing, and the subcarrier spacing is used for the terminal device to determine the time domain length corresponding to the guard period based on a first rule.

In any one of the embodiments of the present application, the first rule is a mapping relationship between the time domain length and the subcarrier spacing.

In any one of the embodiments of the present application, where the second determining unit is further used for determining a time domain position of a given guard period as a time domain position of the guard period.

In any one of the embodiments of the present application, the time domain position of the guard period includes any one of the following:
last M time units of a full downlink resource; or
first K time units of an uplink subband; or
P time units between a full downlink resource and an uplink subband,
where M, K and P are time domain lengths of the guard period, and M, K and P are integers greater than 0.

In any one of the embodiments of the present application, the second sending unit is further used for sending scheduling information to the terminal device, where the scheduling information is used to indicate a first resource; and
where the second determining unit is further used for determining whether a resource conflict exists between a first resource used for a first data transmission and a resource corresponding to the guard period, and performing a second operation in case that the resource conflict exists.

In any one of the embodiments of the present application, the apparatus further includes: a second operating unit,
where the second operating unit is used for performing a second operation including any one of the following:
discarding the first data transmission;
delaying sending the first data transmission;
delaying receiving the first data transmission; or
performing rate matching on the first data transmission for the resource corresponding to the guard period.

An embodiment of the present application further provides a terminal device, including a memory, a transceiver and a processor,
where the memory is used for storing a computer program, the transceiver is used for receiving and sending data under control of the processor, and the processor is used for reading the computer program in the memory and performing any of the methods for guard period determination performed by the terminal device described above.

An embodiment of the present application further provides a network device, including a memory, a transceiver and a processor,
where the memory is used for storing a computer program, the transceiver is used for receiving and sending data under control of the processor, and the processor is used for reading the computer program in the memory and performing any of the methods for guard period determination performed by the network device described above.

An embodiment of the present application further provides a processor-readable storage medium, where the processor-readable storage medium stores a computer program, and the computer program is used to cause a processor to perform any of the methods for guard period determination described above.

In the methods and apparatuses for guard period determination provided by the embodiments of the present application, the guard period is determined based on the first information, where the first information is used to indicate the frequency domain resource corresponding to the guard period based on the first frequency domain unit and/or to indicate the time domain resource corresponding to the guard period based on the first frequency domain unit, and the frequency domain width of the first frequency domain unit is smaller than the frequency domain width of the BWP. The guard period may be flexibly determined. In any one of the embodiments of the present application, a shorter guard period (GP) is configured. In case that a timing advance-offset (TA-offset) is equal to 0, the GP may be configured to be 0. The method for guard period determination provided by the embodiments of the present application may reduce guard period overhead and improve resource utilization.

### BRIEF DESCRIPTION OF THE DRAWINGS

In order to illustrate solutions disclosed in the embodiments of the present application or the related art more clearly, drawings used in the description of the embodiments or the related art are briefly described below. The drawings in the following description are only some embodiments of the present application, and other drawings may be obtained according to these drawings without any creative work for those skilled in the art.
FIG. 1 is a schematic diagram of uplink downlink switching time of a terminal according to the present application;
FIG. 2 is a schematic diagram of a cross link interference according to the present application;
FIG. 3 is a first schematic diagram of a scenario according to the present application;
FIG. 4 is a second schematic diagram of a scenario according to the present application;
FIG. 5 is a first schematic flowchart of a method for guard period determination according to an embodiment of the present application;
FIG. 6 is a first schematic diagram of a time domain position according to an embodiment of the present application;
FIG. 7 is a second schematic flowchart of a method for guard period determination according to an embodiment of the present application;
FIG. 8 is a first schematic diagram of an application according to an embodiment of the present application;
FIG. 9 is a second schematic diagram of an application according to an embodiment of the present application;
FIG. 10 is a schematic diagram of a guard period (GP) time domain length according to an embodiment of the present application;
FIG. 11 is a second schematic diagram of a time domain position according to an embodiment of the present application;
FIG. 12 is a third schematic diagram of a time domain position according to an embodiment of the present application;
FIG. 13 is a first schematic structural diagram of an apparatus for guard period determination according to an embodiment of the present application;
FIG. 14 is a second schematic structural diagram of an apparatus for guard period determination according to an embodiment of the present application;
FIG. 15 is a schematic structural diagram of a terminal device according to an embodiment of the present application; and
FIG. 16 is a schematic structural diagram of a network device according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

The term "multiple" in embodiments of the present application refers to two or more than two, and other quantifiers are similar thereto.

Solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of skill in the art based on the embodiments of the present application without any creative work belong to the scope of the present application.

The solutions provided by the embodiments of the present application may be applied to a variety of systems, especially 5th generation mobile communication technology (5G) systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network part, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CNs) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

Network devices and terminal devices may each use one or more antennas for multi-input multi-output (MIMO) transmission. The MIMO transmission may be single user MIMO (SU-MIMO) or multi user MIMO (MU-MIMO). Depending on the form and the quantity of antenna combinations, MIMO transmission may be 2D-MIMO, 3D-MIMO, FD-MIMO or massive-MIMO, or may be diversity transmission, precoding transmission or beamforming transmission, etc.

To facilitate understanding of embodiments of the present application, terms or backgrounds related to the embodiments of the present application are introduced in the following.

In order to solve coverage, latency and capacity issues of uplink transmission in a time division duplex (TDD) mode, frequency domain resources are divided into multiple subbands without overlapping in the related art, and uplink and downlink frequency domain resources are located in different subbands respectively. This technology is called non-overlapping subband full duplex, which may be referred to as subband full duplex.

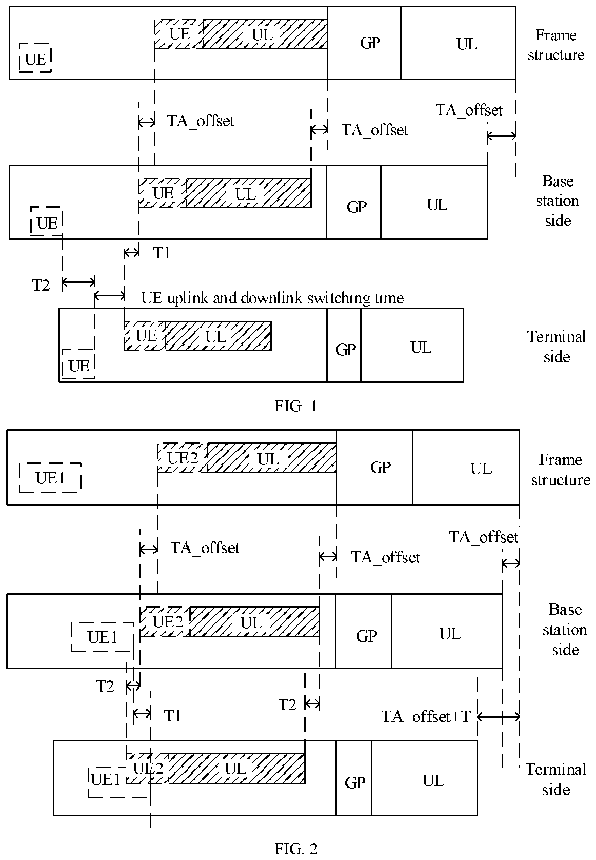

FIG. 1 is a schematic diagram of uplink downlink switching time of a terminal according to the present application. In FIG. 1, a schematic diagram corresponding to a frame structure refers to a configured frame structure, a schematic diagram corresponding to a base station side refers to a frame structure actually received or sent by the base station side, and a schematic diagram corresponding to a terminal side refers to a frame structure actually received or sent by the terminal side. A horizontal direction may represent time domain resources, and a vertical direction represents frequency domain resources. UL represents uplink, GP represents a guard period, a shaded part represents an uplink subband, a blank dashed line block represents that a UE is scheduled in the full downlink symbol, TA_offset represents the timing advance, T1 refers to a time from a sending by the terminal side to a reception at the base station side, and T2 refers to time between the base station side sending to the terminal side receiving. As shown in FIG. 1, in order to reserve enough uplink and downlink switching time for a half-duplex UE at a switching point position of a full downlink symbol and a symbol where a UL subband is located, it is necessary to reserve enough time between the full downlink symbol and the symbol where the UL subband is located, otherwise the UE cannot send uplink data based on scheduling of the base station after receiving downlink data.

FIG. 2 is a schematic diagram of a cross link interference (CLI) according to the present application. A schematic diagram corresponding to a frame structure refers to a configured frame structure, a schematic diagram corresponding to a base station side refers to a frame structure actually received or sent by the base station side, and a schematic diagram corresponding to a terminal side refers to a frame structure actually received or sent by the terminal side. A horizontal direction may represent time domain resources, and a vertical direction represents frequency domain resources. UL represents uplink, and GP represents a guard period. FIG. 2 includes two terminals: UE1 and UE2. A blank dashed line block represents that UE1 is scheduled in a full downlink resource, a shaded part represents that UE2 is scheduled in a UL subband resource, T1 represents a transmission delay between UE2 and the base station, and T2 represents a transmission delay between UE1 and the base station side. For different UEs, in case that there is no enough period between the time domain positions where UE1 and UE2 are scheduled, and a downlink frequency domain resource of UE1 and an uplink frequency domain resource of UE2 are partially or completely conflicting (overlapping), uplink transmission of UE2 will cause interference to downlink reception of UE1.

A guard period is reserved through an implementation by the base station, that is, the base station does not schedule a channel or signal transmission on resources corresponding to the guard period. This method is valid for a single transmission dynamically scheduled based on downlink control information (DCI), that is, the base station avoids a guard period position when configuring single transmission resources, but for a scenario where one piece of DCI or radio resource control (RRC) schedules multiple transmissions, such as repetition, configured grant physical uplink shared channel (CG-PUSCH) and semi-persistent scheduling-physical downlink shared channel (SPS-PDSCH), the base station needs to schedule carefully to avoid a collision between one of the multiple transmissions and the guard period, and complexity of base station implementation increases.

For a long term evolution (LTE) time domain duplex (TDD) system, a position of a guard period (GP) is predefined, that is, for a certain TDD configuration, the position of the GP is fixed, and is located between a downlink symbol and an uplink symbol, and a frequency domain range of the GP spans an entire carrier. For a new radio (NR) TDD system, the base station reserves the GP by configuring a "flexible symbol". The "flexible symbol" is configured based on a bandwidth part (BWP). Although a position of a cell-level GP is configurable, it is still located between a downlink symbol and an uplink symbol, and its frequency domain range spans an entire BWP.

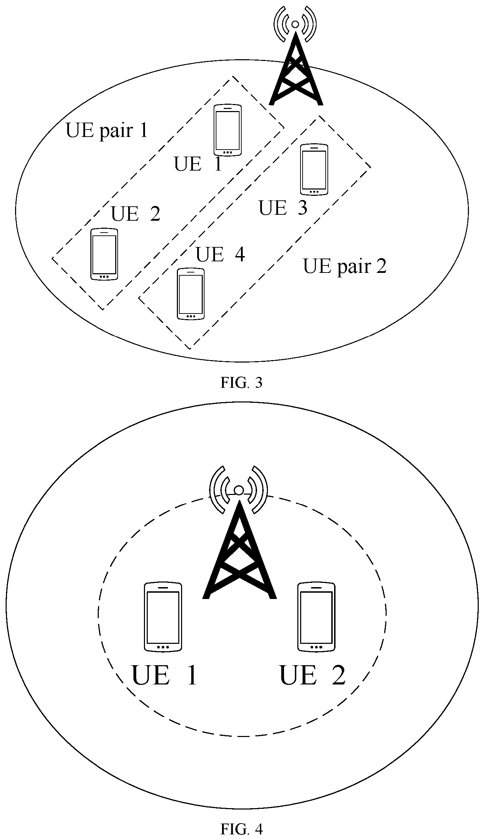

FIG. 3 is a first schematic diagram of a scenario according to the present application, and FIG. 4 is a second schematic diagram of a scenario according to the present application. For scenarios in FIG. 3 and FIG. 4, a shorter GP is required or no GP is required. The detailed reasons are as follows.

As shown in FIG. 3, for a terminal pair (UE pair, i.e., a pair of terminal devices) shown in FIG. 3, since each terminal pair includes a cell center UE and a cell edge UE, and since the two UEs are far apart, even if an uplink of UE2 and a downlink of UE1 as shown in FIG. 2 collide, due to large path loss, strong cross interference will not be generated, and therefore the GP for this kind of UEs may be configured to 0.

For the cell center UE shown in FIG. 4, T1 and T2 shown in FIG. 2 are small or close to 0. A shorter GP may be configured as a GP of this kind of UEs, and in case that a timing advance-offset (TA-offset) is equal to 0, the GP may be configured to 0.

In addition, for symbols where an uplink subband is located, some UEs may use a downlink subband resource in the signal for transmission, and no switching time is required from a full downlink symbol to the downlink subband. Therefore, there is no need to reserve a GP within a frequency domain resource range of the downlink subband.

In some application scenarios, the GP may be configured as a shorter GP, and in case that the TA-offset is equal to 0, the GP may be configured to be 0. Therefore, a GP design spans an entire carrier or a BWP has a problem of wasting resources.

An embodiment of the present application provides a method for guard period determination, which may configure a frequency domain position and a time domain length of a guard period based on a resource block (RB)/RB group/subband; and/or predefine a time domain position of a guard period or semi-statically configure/dynamically indicate a time domain position of a guard period, to achieve flexible configuration of the guard period and avoid waste of resources.

Solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of skill in the art based on the embodiments of the present application without any creative work belong to the scope of the present application.

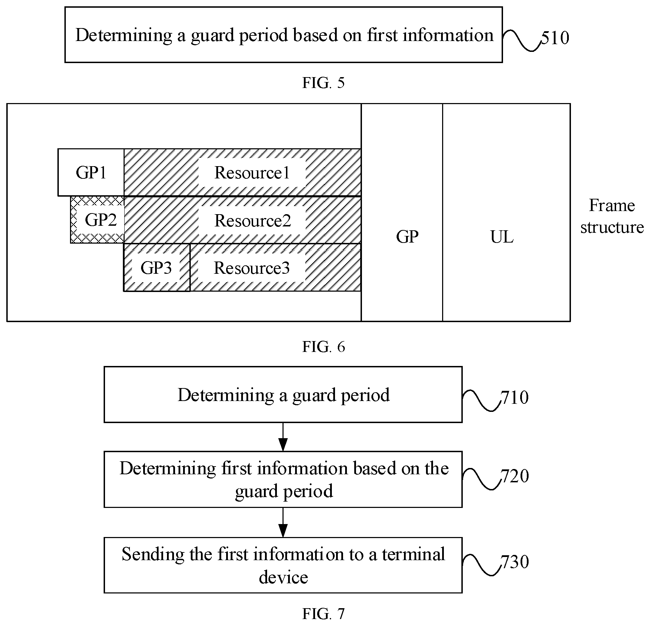

FIG. 5 is a first schematic flowchart of a method for guard period determination according to an embodiment of the present application. As shown in FIG. 5, an embodiment of the present application provides a method for guard period determination, performed by a terminal device, and including the following steps.

Step 510: determining a guard period based on first information.

The first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part (BWP).

In any one of the embodiments of the present application, the first frequency domain unit refers to a basic resource unit for configuring or determining a guard period, and the frequency domain width of the first frequency domain unit is smaller than the frequency domain width of the BWP. The first information is used to indicate the terminal device to determine the guard period using the first frequency domain unit as a basic unit.

In any one of the embodiments of the present application, the first information may indicate the frequency domain resource corresponding to the guard period by indicating a position of each first frequency domain unit. The first information may also indicate the time domain information of the guard period. In any one of the embodiments of the present application, the time domain information includes a time domain length and/or a time domain position of the guard period. In the method provided by the embodiment of the present application, since the frequency domain width of the first frequency domain unit is smaller than the frequency domain width of the BWP, in case that a total frequency domain width of multiple continuous first frequency domain units is greater than or equal to a frequency domain width of a BWP/carrier, the frequency domain width of the guard period determined based on the first frequency domain unit may span the BWP/carrier; and in case that a total frequency domain width of multiple first frequency domain units is smaller than a frequency domain width of a BWP/carrier, the frequency domain width of the guard period determined based on the first frequency domain unit may not span the BWP/carrier. That is, the guard period determined based on the frequency domain width of the first frequency domain unit may span the entire BWP/carrier, or may not span the entire BWP/carrier, that is, the frequency domain resource corresponding to the guard period may be equal to the frequency domain resource occupied by the BWP/carrier, or may be smaller than the frequency domain resource occupied by the BWP/carrier. The above is an example for convenience of understanding the present application and should not constitute any limitation to the present application.

The first information may be one piece of information or a group of information consisting of multiple pieces of information. The first information may be predefined, such as predefined by a protocol. In case that the first information is predefined, the terminal device may directly determine the guard period based on the predefined first information. The first information may be sent from a network device to the terminal device, such as the terminal device may receive the first information through an RRC signaling. A case that the terminal device obtains the first information sent from the network device through a relay device or the like also belongs to receiving the first information sent from the network device. In case that the first information includes multiple pieces of information, some of the multiple pieces of information may be predefined and some may be sent form the network device; or all of them may be predefined or all of them may be sent from the network device.

In the method for guard period determination provided by the embodiment of the present application, the guard period is determined based on the first information, where the first information is used to indicate the frequency domain resource corresponding to the guard period based on the first frequency domain unit and/or to indicate the time domain resource corresponding to the guard period based on the first frequency domain unit, and the frequency domain width of the first frequency domain unit is smaller than the frequency domain width of the BWP. The method for guard period determination provided by the embodiment of the present application may flexibly determine the guard period. In any one of the embodiments of the present application, a shorter guard period (GP) is configured. In case that a TA-offset is equal to 0, the GP may be configured to be 0. The method for guard period determination provided by the embodiment of the present application may reduce guard period overhead and improve resource utilization.

In any one of the embodiments of the present application, the first information is used to indicate the time domain resource corresponding to the guard period by indicating a time domain resource corresponding to the first frequency domain unit.

In any one of the embodiments of the present application, the first information may indicate the time domain resource corresponding to each first frequency domain unit, and a time domain resource corresponding to all first frequency domain units is the time domain resource corresponding to the guard period. The time domain resource corresponding to each first frequency domain unit may be the same or different.

In any one of the embodiments of the present application, taking an RB as the first frequency domain unit as an example, the first information may indicate, to the terminal device, a position of each RB where the guard period is located. The first information may indicate time domain information corresponding to each RB, and the time domain information of the guard period may be determined based on the time domain information corresponding to all RBs.

In any one of the embodiments of the present application, the first frequency domain unit is an RB or an RB group, and the time domain resource may be configured based on the RB or the RB group, so that different time domain lengths may be configured on different RBs or RB groups.

In any one of the embodiments of the present application, GP1 corresponds to UE1, GP2 corresponds to UE2, and GP1 and GP2 correspond to five first frequency domain units respectively. Each first frequency domain unit in GP1 may be configured with one time unit, each first frequency domain unit in GP2 may be configured with two time units, and then time domain lengths of guard periods corresponding to UE1 and UE2 are different, where the time unit may be a symbol. The above is an example for convenience of understanding the present application, and the embodiments of the present application do not limit time unit corresponding to each first frequency domain unit.

In the method for guard period determination provided by the embodiment of the present application, the time domain resource of the guard period may be configured on each first frequency domain unit, and different time domain resources of the guard periods may be configured on different first frequency domain units to match different guard periods required by different UEs. Compared with configuration based on a maximum guard period requirement within an entire subband range, resource overhead and spectrum utilization reduction caused by the guard period may be reduced. In any one of the embodiments of the present application, a shorter GP is configured in some RBs, and in case that the TA-offset is equal to 0, the GP may be configured to be 0. The method for guard period determination provided by the embodiment of the present application may reduce guard period overhead and improve resource utilization.

In any one of the embodiments of the present application, the first frequency domain unit includes any one of the following:
a resource block (RB);
a resource block (RB) group, where the RB group is composed of multiple RBs; or
a subband.

For an RB, a basic unit for guard period determination is an RB, and the terminal device may determine K continuous or discontinuous resource blocks as the frequency domain resource corresponding to the guard period.

For an RB group, it means that the basic unit for guard period determination is an RB group, and RB group is composed of multiple RBs. The implementation of the present application does not limit a quantity of RBs consisting RB group. It should be noted that a size of RB group in the embodiments of the present application may be different from an RB combination (a resource block group (RBG)) in the related art. The RBG is a resource unit allocated for service channel resources.

In any one of the embodiments of the present application, in order to facilitate resource allocation, the RB group in the present application may be aligned with the RBG in the related art, that is, a size of the RB group is a size of the RBG, and a position of the RB group is the same as a position of the RBG; or a size of the RB group may be configurable. For example, the base station may configure a quantity N of RBs through RRC, and the quantity N of RBs may also be agreed by the protocol. A value of N may be 2, 4, 8 or 16. The above is an example for convenience of understanding the present application and should not constitute any limitation to the present application.

For a subband, it means that the basic unit for guard period determination is a subband. The subband refers to a frequency domain resource that includes multiple continuous RBs/RB groups in the frequency domain. The subband in the embodiment of the present application may be an uplink subband.

In any one of the embodiments of the present application, the frequency domain resources may be divided into uplink subband 1, uplink subband 2 and uplink subband 3. In case that the first information indicates that the terminal device uses uplink subband 2 as the frequency domain resource corresponding to the guard period, the terminal device determines that uplink subband 2 is the frequency domain resource corresponding to the guard period.

In the method for guard period determination provided by the embodiment of the present application, the frequency domain resource corresponding to the guard period is determined based on the RB, the RB group or the subband, and the guard period may be flexibly determined, to reduce the guard period overhead and improve resource utilization.

In any one of the embodiments of the present application, the first information includes any one of the following:
RB starting position information and RB length information;
RB group starting position information and RB group length information;
bitmap information used to identify a frequency domain position; or
subband frequency domain position information.

In case that the first information is the RB starting position information and the RB length information, a group of continuous RBs may be determined as the frequency domain range corresponding to the guard period. The RB starting position information is used to indicate a starting RB, the RB length information may be used to indicate a length of RBs consisting the guard period, and the length of the RBs may be represented by a quantity of RBs. A sequence number of the starting RB may be used as the RB starting position information, and the sequence number of the starting RB may be a sequence number of an RB within a subband range, a BWP, or a carrier range.

A group of continuous RBs may be determined, based on the above RB starting position information and the above RB length information, as the frequency domain range corresponding to the guard period.

In case that the first information is the RB group starting position information and the RB group length information, the RB group starting position information is used to indicate the starting RB group, the RB group length information may be used to indicate a length of RB groups consisting the guard period, and the length of the RB groups may be represented by a quantity of RB groups. Since the RB group is composed of RBs, the sequence number of the starting RB may also be used as the RB group starting position information, and the sequence number of the starting RB may be a sequence number of an RB within a subband range, a BWP, or a carrier range.

A group of continuous RB groups may be determined, based on the above RB group starting position information and the above RB group length information, as the frequency domain range corresponding to the guard period.

In case that the first information is bitmap information used to identify the frequency domain position, it represents that one bit is used to mark one first frequency domain unit. The first frequency domain unit may be an RB, an RB group, etc. At this time, a quantity of occupied bits may be determined based on the frequency domain width of the first frequency domain unit, such as a frequency domain width of a subband, a width of a BWP or a frequency domain width of a carrier.

A group of continuous or discontinuous RBs/RB groups may be determined, based on the bitmap information, as the frequency domain range corresponding to the guard period.

In case that the first information is the subband frequency domain position information, it represents that a frequency domain resource indicated by the subband frequency domain position information is used as the frequency domain resource corresponding to the guard period, that is, the frequency domain range of the guard period is aligned with a subband frequency domain.

In the method for guard period determination provided by the embodiment of the present application, a variety of frequency domain resource indication ways are provided, which may flexibly determine the frequency domain resource corresponding to the guard period, thereby reducing guard period overhead and improving resource utilization.

In any one of the embodiments of the present application, the time domain resource includes a time domain length and/or a time domain position.

In any one of the embodiments of the present application, the time domain length may refer to a length in a time domain, which may be represented by a quantity of time units. The time domain position may refer to a starting position and/or an ending position in the time domain, or a type of a time domain resource, such as a downlink time domain resource (such as a downlink symbol), an uplink time domain resource (such as an uplink subband, etc.).

In any one of the embodiments of the present application, the first information is further used to determine a time domain length corresponding to the guard period and/or to determine a time domain position corresponding to the guard period.

In any one of the embodiments of the present application, the first information may directly indicate the time domain length and/or the time domain position corresponding to the guard period, that is, a time domain length indicated by the first information is the time domain length corresponding to the guard period, and a time domain position indicated by the first information is the time domain position corresponding to the guard period.

The first information may also indicate the time domain length corresponding to the guard period through a time domain length corresponding to the first frequency domain unit and/or indicate the time domain position corresponding to the guard period through a time domain position corresponding to the first frequency domain unit. The time domain length corresponding to the guard period may be determined based on the time domain length corresponding to the first frequency domain unit, such as a total time domain length corresponding to all first frequency domain units is determined as the time domain length corresponding to the guard period. The time domain position corresponding to the guard period may be determined based on the time domain position corresponding to the first frequency domain unit. After determining a time domain position corresponding to each first frequency domain unit, the time domain position corresponding to the guard period may be determined.

The time domain length corresponding to the guard period may refer to a length in the time domain corresponding to the guard period, which may be represented by a quantity of time units occupied by the guard period, and the time domain position corresponding to the guard period may refer to a starting position and/or an ending position corresponding to the guard period, or may refer to a type of a time domain resource where the guard period is located, such as a downlink time domain resource (such as a downlink symbol), an uplink time domain resource (such as an uplink subband, etc.). The time domain resource corresponding to the guard period may be determined based on the first information.

In the method for guard period determination provided by the embodiment of the present application, the time domain resource includes the time domain length and/or the time domain position, and the time domain resource corresponding to the guard period may be flexibly determined by indicating the time domain length and/or the time domain position, to flexibly determine the guard period.

In any one of the embodiments of the present application, the method includes:
in case that the first information includes a first rule and subcarrier spacing information, determining the guard period based on the first information includes: determining a time domain length corresponding to the guard period based on the first rule and subcarrier spacing, where the subcarrier spacing is determined based on the subcarrier spacing information; or
in case that the first information includes time domain length information, determining the guard period based on the first information includes: determining a time domain length corresponding to the guard period based on the time domain length information.

In any one of the embodiments of the present application, in case that the first information includes the first rule and the subcarrier spacing information, the subcarrier spacing information is used to indicate the subcarrier spacing, the first rule is used to determine the time domain length corresponding to the guard period based on the subcarrier spacing, and the subcarrier spacing is determined based on the subcarrier spacing information. The first rule may be predefined by the protocol, or the first rule may be sent from the network device.

In any one of the embodiments of the present application, a method for determining the time domain length of the guard period based on the first rule and the subcarrier spacing may be applied to the time domain length of the guard period determined based on the subband width.

In any one of the embodiments of the present application, the first rule is a mapping relationship between the time domain length and the subcarrier spacing.

In any one of the embodiments of the present application, the time domain length may be predefined, and has a subcarrier spacing (SCS) related to a quantity K of symbols. For example, in case that SCS=15 KHz, K=1; and in case that SCS=30 KHz, K=2.

In any one of the embodiments of the present application, the time domain length (a quantity of occupied symbols) of each RB or RB group may be determined based on the first rule. For example, in case that SCS=15 KHz, K=1; and in case that SCS=30 KHz, K=2, where K is a quantity of symbols occupied by each RB or RB group.

In any one of the embodiments of the present application, the time domain length (a quantity of occupied symbols) of the guard period may be determined based on the first rule. For example, in case that SCS=15 KHz, K=1; and in case that SCS=30 KHz, K=2, where K is the quantity of symbols occupied by the guard period.

The above is an example for convenience of understanding the present application and should not constitute any limitation to the present application.

In case that the first information includes the time domain length information, the time domain length information may directly indicate the time domain length corresponding to a time period, or may indicate a time domain length corresponding to each first frequency domain unit.

In case that the time domain length information directly indicates the time domain length corresponding to the time period, the time domain length information may be used for the frequency domain unit to indicate the quantity of time units, such as the K symbols. Determining the time domain length corresponding to the guard period based on the time domain length information refers to taking the quantity of time units indicated by the time domain length information as the time domain length corresponding to the guard period.

In case that the time domain length information indicates the time domain length corresponding to each first frequency domain unit, the time domain length corresponding to each first frequency domain unit is indicated by the time domain length information, and after determining the time domain length corresponding to each first frequency domain unit, the time domain length corresponding to the guard period may be determined. The time domain length corresponding to each first frequency domain unit may be the same or different.

The first frequency domain unit may be an RB, an RB group or a subband.

In any one of the embodiments of the present application, the time domain length information is sent from the network device, and the time domain length information may be carried by an RRC signaling. The terminal device obtains the time domain length information by receiving the RRC signaling sent from the network device.

In the method for guard period determination provided by the embodiment of the present application, the time domain length corresponding to the guard period can be determined, to determine the time domain resource corresponding to the guard period. The guard period may be flexibly determined.

In any one of the embodiments of the present application, the method includes:
in case that the first information includes a time domain position of a given guard period, determining the guard period based on the first information includes: determining the time domain position of the given guard period as a time domain position of the guard period; or
in case that the first information includes time domain position information used to indicate a time domain position, determining the guard period based on the first information includes: determining a time domain position of the given guard period based on the time domain position information.

In any one of the embodiments of the present application, the time domain position information is sent from a network device.

In case that the first information includes the time domain position of the given guard period, the time domain position of the given guard period may be unique. The time domain position of the given guard period may be specified by the protocol, and the UE determines the time domain position of the guard period by constraining through the protocol.

For example, last K time units of the full downlink resource are predefined as the guard period, or first K time units of the UL subband are predefined as the guard period, where K is a quantity of time units corresponding to the guard period, and a value of K may be determined based on the time domain length corresponding to the guard period.

In the method for guard period determination provided by the embodiment of the present application, the time domain position of the given guard period is directly used as the time domain position of the guard period without requiring information interaction, to avoid delay caused by the information interaction.

In case that the first information includes the time domain position information, the time domain position information is used to indicate the time domain position of the guard period, and the terminal device may directly determine the time domain position of the guard period based on the time domain position information.

In any one of the embodiments of the present application, the time domain position information may be carried by an RRC signaling or DCI.

In any one of the embodiments of the present application, the time domain position information may indicate a time domain position of each first resource unit (such as an RB/an RB group), and the terminal device determines the time domain position of the guard period based on the time domain position of the first resource unit.

In any one of the embodiments of the present application, the RRC signaling may configure the guard period to be located at position 1 or position 2 based on an RB granularity/an RB group granularity. Position 1 and position 2 are the time domain positions of the given guard period. In case that the first frequency domain unit corresponding to the guard period has RB 1 and RB2, the RRC signaling may indicate that RB1 is located at position 1 and RB2 is located at position 2, to determine the time domain position corresponding to the guard period.

In the method for guard period determination provided by the embodiment of the present application, the terminal may flexibly configure the time domain position of the guard period based on an indication of the network device, to improve flexibility of a system. In addition, the network device may configure the time domain position of the guard period based on a load condition, to improve resource utilization efficiency.

In any one of the embodiments of the present application, the time domain position of the guard period is any one of the following:
last M time units of a full downlink resource; or
first K time units of an uplink subband; or
P time units between a full downlink resource and an uplink subband,
where M, K and P are time domain lengths of the guard period, and M, K and P are integers greater than 0.

FIG. 6 is a first schematic diagram of a time domain position according to an embodiment of the present application. As shown in FIG. 6, a shaded part represents an uplink subband, a time domain position of GP1 is last M time units of a full downlink resource, a time domain position of GP2 is P time units between a full downlink resource and an uplink subband (that is, a time domain range where GP2 is located belongs neither to a time domain range of a full downlink symbol nor to a time domain range where the UL subband is located), and a time domain position of GP3 is first K time units of the uplink subband.

In case that the time domain length of the guard period is determined, M, K and P may be determined based on the time domain length of the guard period. For example, in case that the time domain length of the guard period is five time units, and the time domain position is last M time units of a full downlink resource, M=5, and the time domain position of the guard period is the last five time units of the full downlink resource. The above is an example for convenience of understanding the present application and should not constitute any limitation to the present application.

In any one of the embodiments of the present application, in the time domain position indicated by the time domain position information and the time domain position of the given guard period, in case that M, K and P are known, they may be used as the time domain length. In any one of the embodiments of the present application, in case that the time domain position of the given guard period is first K time units of the uplink subband, K=6, and the K=6 time lengths may be used as the time domain length of the guard period; and in case that the time domain position indicated by the time domain position information is P time units between a full downlink resource and a uplink subband, P=8, and the P=8 time lengths may be used as the time domain length of the guard period. The above is an example for convenience of understanding the present application and should not constitute any limitation to the present application.

For P time units between a full downlink resource and an uplink subband, a starting time unit and/or an ending time unit may be predefined or notified by the network device.

In the method for guard period determination provided by the embodiment of the present application, a variety of time domain positions of the guard period are provided, and the terminal may flexibly configure the time domain position of the guard period. In addition, the time domain position of the guard period is located in the full downlink resource, located in the uplink subband, or located between the full downlink resource and the uplink subband, and the time domain position of the guard period may be configured based on the load condition, to improve resource utilization efficiency.

In any one of the embodiments of the present application, the method further includes:
receiving scheduling information sent from a network device and used to indicate a first resource, where the first resource is used for a first data transmission; and
determining, based on the guard period and the scheduling information, whether a resource conflict exists between the first resource and a resource corresponding to the guard period, and performing a first operation in case that the resource conflict exists.

In any one of the embodiments of the present application, the scheduling information is used to indicate a resource used for the first data transmission, and the resource may include a frequency domain resource and/or a time domain resource. The first data transmission includes uplink sending or downlink reception.

Whether a resource conflict exists between a time-frequency domain resource corresponding to the first data transmission and a time-frequency domain resource corresponding to the guard period is determined. In case that the resource conflict exists, the first operation is performed, where the first operation is used to solve a resource conflict problem.

In any one of the embodiments of the present application, the first operation includes any one of the following:
discarding the first data transmission;
delaying sending the first data transmission;
delaying receiving the first data transmission; or
performing rate matching on the first data transmission for the resource corresponding to the guard period.

Discarding the first data transmission means that the terminal device does not receive or send the first data transmission in which a resource conflict occurs, and abandons the corresponding transmission procedure.

Delaying sending the first data transmission means that for a repetition transmission, in case that a resource conflict exists, at this time, the terminal device does not send the corresponding first data transmission, does not calculate a quantity of valid transmissions, and continues to transmit on subsequent resources.

Delaying receiving the first data transmission refers to that for a repetition transmission, in case that a resource conflict exists, at this time, the terminal device does not receive the corresponding first data transmission, does not calculate a quantity of valid transmissions, and continues to transmit on subsequent resources.

Rate matching refers to aligning a quantity of encoded bits with an actual quantity of resources available for transmission. For the resource corresponding to the guard period, rate matching is performed on the first data transmission. For details, reference may be made to related rate matching technologies, which are not repeated here.

In the method for guard period determination provided by the embodiment of the present application, the terminal device may perform the first operation in case that the resource conflict exists between the time-frequency domain resource for a data transmission and the time-frequency domain resource of the guard period, to reduce complexity of base station scheduling.

FIG. 7 is a second schematic flowchart of a method for guard period determination according to an embodiment of the present application. As shown in FIG. 7, an embodiment of the present application provides a method for guard period determination, performed by a network device, and including the following steps.

Step 710: determining a guard period.

Step 720: determining first information based on the guard period.

Step 730: sending the first information to a terminal device.

The first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part (BWP).

In any one of the embodiments of the present application, the network device may be an access network device such as a base station.

The network device may determine the guard period based on a predefined rule (such as a rule specified by the protocol), a network load condition, a terminal requirement, etc. The above is an example for convenience of understanding the present application. The embodiments of the present application do not limit how the network device determines the guard period and a specific time-frequency domain resource of the guard period.

Determining the first information based on the guard period refers to determining the first information based on a time-frequency domain resource of the guard period. Introduction of the first information and the first frequency domain unit may refer to the above, which is not repeated here.

In the embodiments of the present application, the network device may determine the frequency domain resource corresponding to the guard period based on the first frequency domain unit, that is, the network device may determine the guard period using the first frequency domain unit as a basic frequency domain unit. Taking an RB group being the first frequency domain unit as an example, the network device may use K RB groups as the frequency domain resource corresponding to the guard period, and configure a corresponding frequency domain resource for the guard period.

In the method for guard period determination provided by the embodiment of the present application, the network device may determine the frequency domain resource corresponding to the guard period based on the first frequency domain unit and send the first information to the terminal device. A granularity of the first frequency domain unit is smaller than a granularity of the BWP, and the guard period may be flexibly determined. In any one of the embodiments of the present application, a shorter guard period (GP) is configured. In case that a TA-offset is equal to 0, the GP may be configured to be 0. The method for guard period determination provided by the embodiments of the present application may reduce guard period overhead and improve resource utilization.

In any one of the embodiments of the present application, the first information is used to indicate a time domain resource corresponding to the guard period based on the time domain resource corresponding to the first frequency domain unit. In any one of the embodiments of the present application, the first information may indicate a time domain resource corresponding to each first frequency domain unit, and a time domain resource corresponding to all first frequency domain units is the time domain resource corresponding to the guard period. The time domain resource corresponding to each first frequency domain unit may be the same or different.

The network device determining the guard period may include:
determining the time domain resource corresponding to the guard period based on the time domain resource corresponding to the first frequency domain unit.

In any one of the embodiments of the present application, the network device may determine the time domain resource corresponding to the first frequency domain unit as the time domain resource corresponding to the guard period.

In the method for guard period determination provided by the embodiment of the present application, the time domain resource of the guard period may be configured on each first frequency domain unit, and different time domain resources of the guard periods may be configured on different first frequency domain units to match different guard periods required by different UEs. Compared with configuration based on a maximum guard period requirement within an entire subband range, resource overhead and spectrum utilization reduction caused by the guard period may be reduced.

In any one of the embodiments of the present application, the first frequency domain unit includes any one of the following:
a resource block (RB);
a resource block (RB) group, where the RB group is composed of multiple RBs; or
a subband.

Introduction of the RB, the RB group and the subband may refer to the above, which is not repeated here.

In the method for guard period determination provided by the embodiment of the present application, the frequency domain resource corresponding to the guard period is determined based on the RB, the RB group or the subband, and the guard period may be flexibly determined.

In any one of the embodiments of the present application, the first information includes any one of the following:
RB starting position information and RB length information;
RB group starting position information and RB group length information;
bitmap information used to identify a frequency domain position; or
subband frequency domain position information.

Introduction of the RB starting position information and the RB length information, the RB group starting position information and the RB group length information, bitmap information used to identify the frequency domain position and the subband frequency domain position information may refer to the above, which is not repeated here.

In the method for guard period determination provided by the embodiment of the present application, a variety of frequency domain resource indication ways are provided, which may flexibly determine the frequency domain resource corresponding to the guard period, to reduce guard period overhead and improve resource utilization.

In any one of the embodiments of the present application, the time domain resource includes a time domain length and/or a time domain position.

Introduction of the time domain length and the time domain position may refer to the above, which is not repeated here.

In any one of the embodiments of the present application, the first information is used to determine a time domain length corresponding to the guard period and/or to determine a time domain position corresponding to the guard period.

In any one of the embodiments of the present application, the first information is further used to determine the time domain length corresponding to the guard period and/or to determine the time domain position corresponding to the guard period.

In any one of the embodiments of the present application, the first information may directly indicate the time domain length and/or the time domain position corresponding to the guard period, that is, a time domain length indicated by the first information is the time domain length corresponding to the guard period, and a time domain position indicated by the first information is the time domain position corresponding to the guard period.

The first information may also indicate the time domain length corresponding to the guard period through a time domain length corresponding to the first frequency domain unit and/or indicate the time domain position corresponding to the guard period through a time domain position corresponding to the first frequency domain unit. The time domain length corresponding to the guard period may be determined based on the time domain length corresponding to the first frequency domain unit, such as a total time domain length corresponding to all first frequency domain units is determined as the time domain length corresponding to the guard period. The time domain position corresponding to the guard period may be determined based on the time domain position corresponding to the first frequency domain unit. After determining a time domain position corresponding to each first frequency domain unit, the time domain position corresponding to the guard period may be determined.

The time domain length corresponding to the guard period may refer to a length in the time domain corresponding to the guard period, which may be represented by a quantity of time units occupied by the guard period, and the time domain position corresponding to the guard period may refer to a starting position and/or an ending position corresponding to the guard period, or may refer to a type of a time domain resource where the guard period is located, such as a downlink time domain resource (such as a downlink symbol), an uplink time domain resource (such as an uplink subband, etc.). The time domain resource corresponding to the guard period may be determined based on the first information.

In the method for guard period determination provided by the embodiment of the present application, the time domain length corresponding to the guard period may be determined based on the first information and/or the time domain position corresponding to the guard period may be determined based on the first information, to determine the time domain resource corresponding to the guard period, which may flexibly determine the guard period.

In any one of the embodiments of the present application, the first information includes time domain length information or subcarrier spacing information,
where the time domain length information is used to determine a time domain length corresponding to the guard period, the subcarrier spacing information is used to determine subcarrier spacing, and the subcarrier spacing is used for the terminal device to determine the time domain length corresponding to the guard period based on a first rule.

In any one of the embodiments of the present application, the network device may determine the time domain length information based on the first rule and the subcarrier spacing, and the time domain length information may also be predefined. The above is an example for convenience of understanding the present application and should not constitute any limitation to the present application.

The determination of the subcarrier spacing information may refer to related art, and the embodiments of the present application do not limit the determination of subcarrier spacing information.

In any one of the embodiments of the present application, the first rule is a mapping relationship between the time domain length and the subcarrier spacing.

Introduction of the first rule may refer to the above, which is not repeated here.

In the method for guard period determination provided by the embodiment of the present application, the network device may send the subcarrier spacing information to the terminal to indicate the time domain length to the terminal, to flexibly configure the time domain length of the guard period and improve system flexibility.

In any one of the embodiments of the present application, determining the guard period includes:
determining, by the network device, a time domain position of a given guard period as a time domain position of the guard period.

In any one of the embodiments of the present application, the time domain position of the given guard period may be unique; or, the time domain position of the given guard period may be specified by the protocol, and the network device determines the guard period through protocol constraints. The network device determines the time domain position of the given guard period as the time domain position of the guard period.

In the method for guard period determination provided by the embodiment of the present application, the time domain position of the given guard period is directly used as the time domain position of the guard period without requiring information interaction, to avoid delay caused by the information interaction.

In any one of the embodiments of the present application, determining the first information based on the guard period includes:
determining the time domain length information based on the time domain length of the guard period or the time domain length of the first frequency domain unit; and
sending the first information to the terminal device includes:
   sending the time domain length information to the terminal device.

In any one of the embodiments of the present application, the first frequency domain unit may be an RB, an RB group or a subband.

In any one of the embodiments of the present application, the first information includes time domain position information, and the time domain position information is determined by the network device based on a guard period.

In any one of the embodiments of the present application, the time domain position information may be determined by the network device based on a network load condition. For example, in case that the uplink resource load is heavy, the time domain position of the guard period is determined as the downlink resource.

In the method for guard period determination provided by the embodiment of the present application, the network device may flexibly configure the time domain position of the guard period and send time domain position information for indicating the time domain position of the guard period to the terminal, to improve flexibility of a system. In addition, the network device may configure the time domain position of the guard period based on a load condition, to improve resource utilization efficiency.

In any one of the embodiments of the present application, the time domain position of the guard period includes any one of the following:
last M time units of a full downlink resource; or
first K time units of an uplink subband; or
P time units between a full downlink resource and an uplink subband,
where M, K and P are time domain lengths of the guard period, and M, K and P are integers greater than 0.

FIG. 6 is a first schematic diagram of a time domain position according to an embodiment of the present application. As shown in FIG. 6, a shaded part represents an uplink subband, a time domain position of GP1 is last M time units of a full downlink resource, a time domain position of GP2 is P time units between a full downlink resource and an uplink subband (that is, a time domain range where GP2 is located belongs neither to a time domain range of a full downlink symbol nor to a time domain range where the UL subband is located), and a time domain position of GP3 is first K time units of the uplink subband. Introduction of the time domain position of the guard period may refer to the above, which is not repeated here.

The time domain position of the guard period determined by the network device is the same as the time domain position of the guard period indicated by the first information.

In the method for guard period determination provided by the embodiment of the present application, a variety of time domain positions of the guard period are provided, and the network device may flexibly configure the time domain position of the guard period. In addition, the time domain position of the guard period is located in the full downlink resource, located in the uplink subband, or located between the full downlink resource and the uplink subband. The network device may configure the time domain position of the guard period based on the load condition, to improve resource utilization efficiency.

In any one of the embodiments of the present application, the method further includes:
determining whether a resource conflict exists between a first resource used for a first data transmission and the resource corresponding to the guard period, and performing a second operation in case that the resource conflict exists.

In any one of the embodiments of the present application, the scheduling information is used to indicate a resource used for the first data transmission, and the resource may include a frequency domain resource and/or a time domain resource. The first data transmission includes uplink sending or downlink reception.

In any one of the embodiments of the present application, the method further includes: sending scheduling information indicating a first resource to the terminal device, where the first resource is used for the first data transmission.

In any one of the embodiments of the present application, the target scheduling information is used to indicate a data transmission, refers to that the target scheduling information is used to indicate a time-frequency domain resource used for data transmission. The data transmission includes uplink sending or downlink reception, and the time-frequency domain resources include a time domain resource and a frequency domain resource.

Whether a resource conflict exists between the time-frequency domain resource corresponding to data transmission and the time-frequency domain resource corresponding to the guard period is determined. In case that the resource conflict exists, the network device performs a second operation, where the second operation is used to solve a resource conflict problem.

In any one of the embodiments of the present application, the second operation includes any one of the following:
discarding the first data transmission;
delaying sending the first data transmission;
delaying receiving the first data transmission; or
performing rate matching on the first data transmission for the resource corresponding to the guard period.

Discarding the first data transmission means that the terminal device does not receive or send the first data transmission in which a resource conflict occurs, and abandons the corresponding transmission procedure.

Delaying sending the first data transmission means that for a repetition transmission, in case that a resource conflict exists, at this time, the terminal device does not send the corresponding first data transmission, does not calculate a quantity of valid transmissions, and continues to transmit on subsequent resources.

Delaying receiving the first data transmission refers to that for a repetition transmission, in case that a resource conflict exists, at this time, the terminal device does not receive the corresponding first data transmission, does not calculate a quantity of valid transmissions, and continues to transmit on subsequent resources.

Rate matching refers to aligning a quantity of encoded bits with an actual quantity of resources available for transmission. For the resource corresponding to the guard period, rate matching is performed on the first data transmission. For details, reference may be made to related rate matching technologies, which are not repeated here.

In the method for guard period determination provided by the embodiment of the present application, in case that the resource conflict exists between the resource of the first data transmission and the guard period, the network device performs the second operation, to solve a problem of unable to perform transmission due to the resource conflict.

The following describes a method for guard period determination provided by an embodiment of the present application in combination with multiple embodiments.

Embodiment 1: a frequency domain position and a time domain length of a guard period are configured with an RB or an RB group as a first frequency domain unit, and a time domain position of the guard period is predefined or a time domain position of the guard period is semi-statically configured.

Terminal device (UE) behavior: a UE determines a frequency domain resource and/or the time domain length of the guard period configured by a network device based on an RRC signaling/a DCI signaling, where the frequency domain resource/the time domain length is configured based on the first frequency domain unit, the first frequency domain unit is an RB/an RB group, and the RRC signaling may be a cell-level signaling or a UE group-level signaling.

### (1) Method for frequency domain resource determination

The frequency domain resource may be continuous or discontinuous.

In case that positions of the frequency domain resource are continuous, the frequency domain resource may be configured based on a combination of RB starting position information and RB length information or based on a combination of RB group starting position information and RB group length information. The RB starting position information and the RB group starting position information may include a sequence number of a starting RB, and the sequence number of the starting RB may be a sequence number of an RB within a subband range, a BWP, or a carrier range.

In case that positions of the frequency domain resource are discontinuous/continuous, the frequency domain resource may be configured based on bitmap information, where the bitmap information is used to identify the frequency domain position. A quantity of bits indicated by the bitmap information may be determined based on a frequency domain width of a subband, a width of a BWP or a frequency domain width of a carrier. In any one of the embodiments of the present application, the quantity of bits indicated by the bitmap information may be determined based on a frequency domain width of a subband, a width of a BWP or a frequency domain width of a carrier, and a quantity of RBs contained in an RB group.

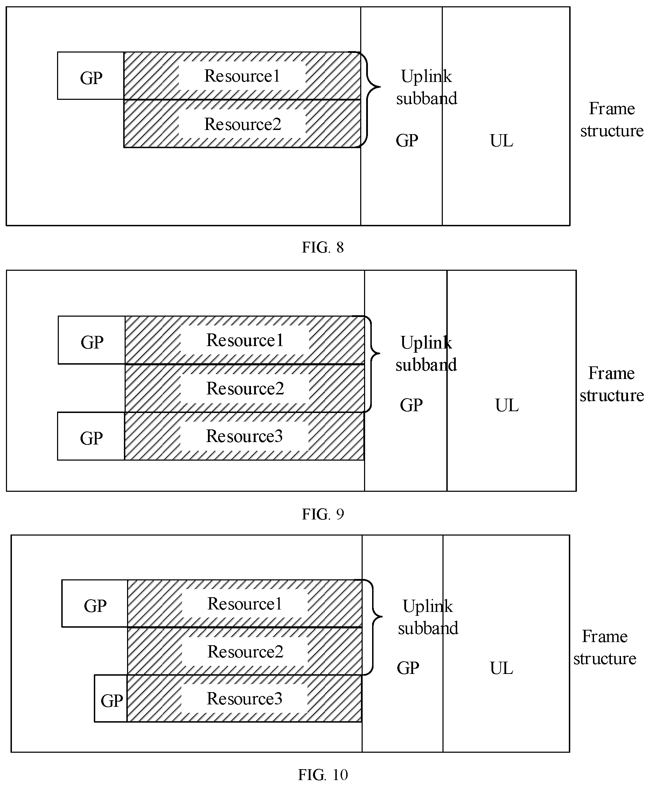

In the method for guard period determination provided by the embodiment of the present application, continuous or discontinuous guard period may be configured on some RBs or RB groups of the uplink subband, as shown in FIG. 8 and FIG. 9.

FIG. 8 is a first schematic diagram of an application according to an embodiment of the present application, and FIG. 9 is a second schematic diagram of an application according to an embodiment of the present application. As shown in FIG. 8 and FIG. 9, UEs that potentially introduced with CLI or affected by an CLI are scheduled within a frequency domain resource range with a guard period, such as Resource1 shown in FIG. 8, Resource1 shown in FIG. 9, or Resource3 shown in FIG. 9. A cell center UE or a UE pair consisting of a cell center UE and a cell edge UE is scheduled within a frequency domain range that is not configured with the guard period to reduce/eliminate an impact of cross interference, such as Resource2 shown in FIG. 8 or Resource2 shown in FIG. 9. In the absence of an obvious CLI between UEs, resource overhead and spectrum utilization reduction caused by the guard period are reduced.

In any one of the embodiments of the present application, to facilitate resource allocation, the RB group in the present application may be aligned with an RBG in the related art, that is, a size of the RB group is a size of the RBG, and a position of the RB group is the same as a position of the RBG; or the size of the RB group is configurable or predefined. For example, it may be configured to be 2, 4, 8 or 16 RBs.

### (2) Method for time domain length determination

In any one of the embodiments of the present application, a time domain length of a guard period may be determined based on a first rule and subcarrier spacing, and a time domain length of the guard period may be a quantity K of symbols having a mapping relationship with the subcarrier spacing, that is, the first rule is used to specify the mapping relationship between the quantity K of symbols and the subcarrier spacing. For example, in case that SCS=15 KHz, K=1; and in case that SCS=30 KHz, K=2.

In any one of the embodiments of the present application, a time domain length (the quantity K of symbols) is configured by an RRC, for example, K is equal to 0, 1, 2 or 3.

In any one of the embodiments of the present application, the time domain length may be configured based on the first frequency domain unit. For example, it may be configured based on an RB or an RB group. In any one of the embodiments of the present application, different guard period lengths are configured on different RBs or RB groups. FIG. 10 is a schematic diagram of the GP time domain length according to an embodiment of the present application. As shown in FIG. 10, a time domain length of a GP corresponding to Resource1 is different from a time domain length of a GP corresponding to Resource2. The embodiment of the present application may match different guard periods required by different UEs. Compared with a configuration based on a maximum guard period requirement within an entire subband range, resource overhead and spectrum utilization reduction caused by the guard period are reduced.

### (3) Method for time domain position determination

In any one of the embodiments of the present application, a UE may determine a time domain position of a guard period based on a time domain position of the given guard period.

For example, the time domain position of the given guard period is last M time units of a full downlink resource or first K time units of an UL subband, that is, the last K time units of the full downlink resource are used as the guard period or the first K time units of the UL subband are used as the guard period, where M and K are time domain lengths of the guard period determined based on the above-mentioned method for time domain length determination.

In any one of the embodiments of the present application, the UE determines the time domain position of the guard period based on an RRC signaling/DCI.

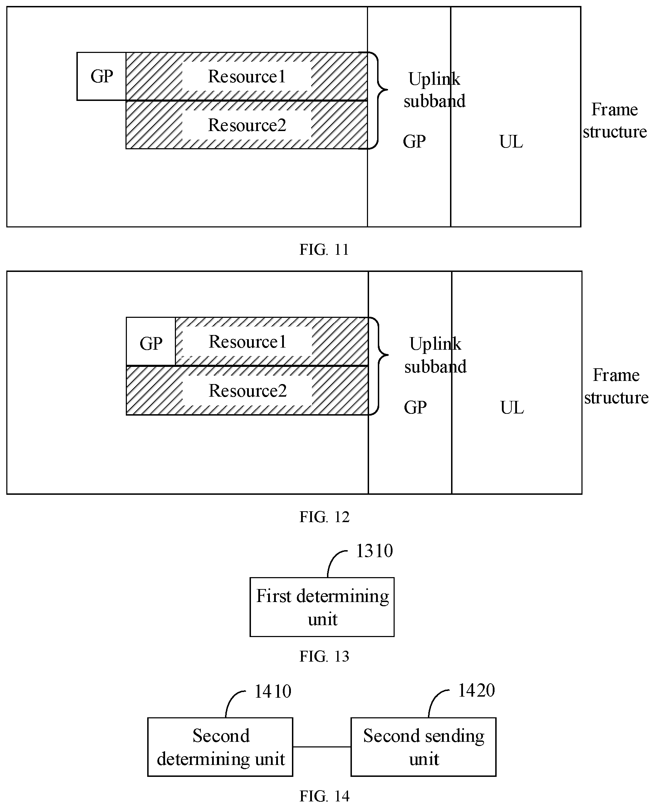

The RRC signaling semi-statically indicates/DCI dynamically indicates that the guard period is located at position 1 or position 2, where position 1 and position 2 are predefined. FIG. 11 is a second schematic diagram of a time domain position according to an embodiment of the present application. As shown in FIG. 11, position 1 is the last M time units of the full downlink resource. FIG. 12 is a third schematic diagram of a time domain position according to an embodiment of the present application. As shown in FIG. 12, position 2 is the first K time units of the uplink subband. In any one of the embodiments of the present application, the RRC signaling may configure the time domain position of the guard period to be located at position 1 or position 2 based on an RB or an RB group. Through this method, a network may flexibly configure the guard period in the downlink resource or an uplink resource based on a load condition.

(4) The UE determines whether to perform a first operation based on whether a resource conflict (overlapping) exists between the guard period and a first data transmission indicated by base station scheduling information.

The first operation includes any one of the following:
discarding the first data transmission;
delaying sending the first data transmission;
delaying receiving the first data transmission; or
performing rate matching on the first data transmission for the resource corresponding to the guard period.

The first data transmission scheduled by the base station may be a single transmission, a repetition, a CG-PUSCH, an SPS-PDSCH or a multi-slot transmission, etc. scheduled by a base station through RRC/DCI.

In the method for guard period determination provided by the embodiment of the present application, guard periods for scenarios of single transmission, or one DCI/RRC scheduled multiple transmission, such as a repetition, a CG-PUSCH, an SPS-PDSCH, etc. are explicitly defined. In case that the resource conflict (overlapping) exists between the guard period and the scheduled first data transmission, the UE may automatically discard, delay or perform rate matching based on the guard period, to further reduce scheduling complexity of the base station.

### Behavior on a base station side:

The base station determines the frequency domain resource and/or the time domain length of the guard period, as well as the time domain position of the guard period. In case that the guard period is determined in the predefined way, the base station does not need to send relevant information to the terminal, and the terminal may also determine the guard period in accordance with the protocol agreement. Otherwise, the base station sends first information used to determine the frequency domain position and/or the time domain length of the guard period, as well as the time domain position of the guard period to the UE.

### (1) Method for frequency domain resource determination and notification

A frequency domain resource may be continuous or discontinuous.

In case that positions of the frequency domain resource are continuous, the frequency domain resource may be configured based on a combination of RB starting position information and RB length information or based on a combination of RB group starting position information and RB group length information. The RB starting position information and the RB group starting position information may include a sequence number of a starting RB, and the sequence number of the starting RB may be a sequence number of an RB within a subband range, a BWP, or a carrier range.

In case that positions of the frequency domain resource are discontinuous/continuous, the frequency domain resource may be configured based on bitmap information, where the bitmap information is used to identify the frequency domain position. A quantity of bits indicated by the bitmap information may be determined based on a frequency domain width of a subband, a width of a BWP or a frequency domain width of a carrier. In any one of the embodiments of the present application, the quantity of bits indicated by the bitmap information may be determined based on a frequency domain width of a subband, a width of a BWP or a frequency domain width of a carrier, and a quantity of RBs contained in an RB group.

In the method for guard period determination provided by the embodiment of the present application, the guard period may be configured on some RBs or RB groups of the uplink subband, UEs that potentially introduced with CLI or affected by an CLI are scheduled within a frequency domain resource range with the guard period, and a cell center UE or a UE pair consisting of the cell center UE and a cell edge UE is scheduled within a frequency domain range that is not configured with the guard period to reduce or eliminate an impact of cross interference. In the absence of an obvious CLI between UEs, resource overhead and spectrum utilization reduction caused by the guard period are reduced.

In any one of the embodiments of the present application, to facilitate resource allocation, the RB group in the present application may be aligned with an RBG in the related art, that is, a size of the RB group is a size of the RBG, and a position of the RB group is the same as a position of the RBG; or the size of the RB group is configurable. For example, it may be configured to be 2, 4, 8 or 16 RBs.

### (2) Method for time domain length determination and notification

In any one of the embodiments of the present application, a time domain length of a guard period may be determined based on a first rule and subcarrier spacing, the first rule may be predefined, and the first rule includes a mapping relationship between the subcarrier spacing and a quantity K of symbols. For example, in case that SCS=15 KHz, K=1; and in case that SCS=30 KHz, K=2. The base station notifies the terminal of subcarrier spacing (SCS) information, and the terminal determines the time domain length information of the guard period based on the predefined rule and the SCS information.

In any one of the embodiments of the present application, a time domain length (the quantity K of symbols) is configured to the UE through RRC, for example, K is equal to 0, 1, 2 or 3.

In any one of the embodiments of the present application, the time domain length may be configured based on the first frequency domain unit. For example, the time domain length may be configured based on an RB or an RB group. The time domain length may be configured based on an RB granularity/an RB group granularity. This method may be used to configure different guard period lengths on different RBs/RB groups to match the different guard periods required by different UEs. Compared with a configuration based on a maximum guard period requirement within an entire subband range, resource overhead and spectrum utilization reduction caused by the guard period are reduced.

### (3) Method for time domain position determination and notification

In any one of the embodiments of the present application, both a base station and a UE determine a time domain position of a guard period based on a time domain position of a given guard period. For example, the time domain position of the given guard period is last M time units of a full downlink resource or the time domain position of the given guard period is first K time units of an UL subband, where M and K are time domain lengths of the guard period. The embodiment of the present application does not limit the method for determining M and K, which may be determined by a first rule and a subcarrier period, or by the time domain position of the given guard period.

In any one of the embodiments of the present application, the base station uses an RRC signaling/DCI to semi-statically indicate/dynamically indicate a determined time domain position of a guard period, and the guard period is located at position 1 or position 2, where position 1 and position 2 are predefined. For example, position 1 is last K time units of a full downlink resource, and position 2 is first K time units of the UL subband.

In any one of the embodiments of the present application, the RRC signaling may configure the guard period to be located at position 1 or position 2 based on an RB granularity or an RB group granularity.

Through this method, the network may flexibly configure the guard period in the downlink resource or the uplink resource based on a load condition.

### (4) Base station behavior regulations

A base station determines whether a resource conflict exists between a first resource used for a first data transmission and a resource corresponding to a guard period, and performs a second operation in case that the resource conflict exists.

The second operation includes any one of the following:
discarding the first data transmission;
delaying sending the first data transmission;
delaying receiving the first data transmission; or
performing rate matching on the first data transmission for the resource corresponding to the guard period.

A data transmission scheduled by the base station may be a single transmission, a repetition, a CG-PUSCH, an SPS-PDSCH or a multi-slot transmission, etc. scheduled by the base station through RRC/DCI.

Embodiment 2: a frequency domain position and a time domain length of a guard period are configured with a subband as a first frequency domain unit; and/or a time domain position of the guard period is predefined in a time domain or a time domain position of the guard period is semi-statically configured.

### UE-side behavior

### (1) Method for frequency domain resource determination

The UE determines the frequency domain position of the guard period based on a frequency domain width of a subband, and the frequency domain position of the guard period is the same as a frequency domain position of an UL subband. The frequency domain width of the subband may be determined based on subband frequency domain position information.

### (2) Method for time domain length determination

The UE determines the time domain length of the guard period based on a first rule and subcarrier spacing, and the time domain length is a quantity K of symbols related to the subcarrier spacing, that is, the first rule includes a mapping relationship between the quantity K of symbols and the subcarrier spacing. For example, in case that SCS=15 KHz, K=1; and in case that SCS=30 KHz, K=2. In any one of the embodiments of the present application, the UE determines the time domain length K based on an RRC signaling, for example, K is equal to 1, 2 or 3.

### (3) Method for time domain position determination

The UE determines the time domain position of the guard period based on an RRC signaling/DCI, and the RRC signaling semi-statically indicates/DCI dynamically indicates that the guard period is located at position 1 or position 2, where position 1 and position 2 are predefined. For example, position 1 is last M time units of a full downlink resource, and position 2 is first K time units of an UL subband, where M and K are time domain lengths of the guard period. The embodiment of the present application does not limit the method for determining M and K, which may be determined based on a first rule and subcarrier spacing, or based on the time domain position of the given guard period. Through this method, the network may flexibly configure the guard period in the downlink resource or the uplink resource based on a load condition.

(4) The UE determines whether to perform a first operation based on whether a resource conflict (overlapping) exists between the guard period and a data transmission indicated by target scheduling information of the base station.

The first operation includes any one of the following:
discarding the data transmission indicated by the target scheduling information;
delaying sending the data transmission indicated by the target scheduling information;
delaying receiving the data transmission indicated by the target scheduling information;
performing rate matching on the data transmission indicated by the target scheduling information for a time-frequency domain resource corresponding to the guard period.

A data transmission scheduled by the base station may be a single transmission, a repetition, a CG-PUSCH, an SPS-PDSCH or a multi-slot transmission, etc. scheduled by the base station through RRC/DCI.

In the method for guard period determination provided by the embodiment of the present application, guard periods for scenarios of single transmission, or one DCI/RRC scheduled multiple transmission, such as a repetition, a CG-PUSCH, an SPS-PDSCH, etc. are explicitly defined. In case that the resource conflict (overlapping) exists between the guard period and a scheduled transmission, the UE may automatically discard, delay or perform rate matching based on the guard period, to further reduce scheduling complexity of the base station.

### Behavior on a base station side:

The base station determines the frequency domain resource and/or the time domain length of the guard period, as well as the time domain position of the guard period. In case that the guard period is determined in the predefined way, the base station does not need to send relevant information to the terminal, and the terminal may also determine the guard period in accordance with the protocol agreement. Otherwise, the base station sends first information used to determine the frequency domain position and/or the time domain length of the guard period, as well as the time domain position of the guard period to the UE.

### (1) Method for frequency domain resource determination and notification

The frequency domain resource of the guard period is the same as the frequency domain resource of the UL subband. The base station notifies the terminal of subband frequency domain position information, which is used to indicate the terminal (UE) a frequency domain resource corresponding to the UL subband. The terminal determines the frequency domain resource of the guard period based on the subband frequency domain position information notified by the base station.

### (2) Method for time domain length determination and notification

The UE and the base station both determine the time domain length of the guard period based on a first rule and subcarrier spacing, the first rule may be predefined, and the first rule includes a mapping relationship between the subcarrier spacing and a quantity K of symbols. For example, in case that SCS=15 KHz, K=1; and in case that SCS=30 KHz, K=2. The base station notifies the terminal of subcarrier spacing (SCS) information, and the terminal determines the time domain length of the guard period based on the SCS information and the predefined first rule.

### (3) Method for time domain position determination and notification

In any one of the embodiments of the present application, both a base station and a UE determine a time domain position of a guard period based on a time domain position of a given guard period. For example, the time domain position of the given guard period is last M time units of a full downlink resource or the time domain position of the given guard period is first K time units of an UL subband.

In any one of the embodiments of the present application, the base station uses an RRC signaling/DCI to semi-statically indicate/dynamically indicate a determined time domain position of a guard period, and the guard period is located at position 1 or position 2, where position 1 and position 2 are predefined. For example, position 1 is last K time units of a full downlink resource, and position 2 is first K time units of the UL subband. M and K are time domain lengths of the guard period. The embodiment of the present application does not limit the method for determining M and K, which may be determined based on a first rule and subcarrier spacing, or based on the time domain position of the given guard period.

In any one of the embodiments of the present application, the RRC signaling may configure the guard period to be located at position 1 or position 2 based on an RB granularity or an RB group granularity.

Through this method, the network may flexibly configure the guard period in the downlink resource or the uplink resource based on a load condition.

### (4) Base station behavior regulations

A base station determines whether a resource conflict exists between a first resource used for a first data transmission and a resource corresponding to a guard period, and performs a second operation in case that the resource conflict exists.

The second operation includes any one of the following:
discarding the first data transmission;
delaying sending the first data transmission;
delaying receiving the first data transmission; or
performing rate matching on the first data transmission for the resource corresponding to the guard period. A data transmission scheduled by the base station may be a single transmission, a repetition, a CG-PUSCH, an SPS-PDSCH or a multi-slot transmission, etc. scheduled by the base station through RRC/DCI.

Referring to FIG. 13, FIG. 13 is a first schematic structural diagram of an apparatus for guard period determination according to an embodiment of the present application. An embodiment of the present application provides an apparatus for guard period determination, which is for use in a terminal device. The apparatus includes: a first determining unit 1310.

The first determining unit 1310 is used for determining a guard period based on first information.

The first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part (BWP).

In any one of the embodiments of the present application, the first information is used to indicate the time domain resource corresponding to the guard period based on the time domain resource corresponding to the first frequency domain unit.

In any one of the embodiments of the present application, the first frequency domain unit includes any one of the following:
a resource block (RB);
a resource block (RB) group, where the RB group is composed of multiple RBs; or
a subband.

In any one of the embodiments of the present application, the first information includes any one of the following:
RB starting position information and RB length information;
RB group starting position information and RB group length information;
bitmap information used to identify a frequency domain position; or
subband frequency domain position information.

In any one of the embodiments of the present application, the time domain resource includes a time domain length and/or a time domain position.

In any one of the embodiments of the present application, the first determining unit 1310 is further used for, in case that the first information includes a first rule and subcarrier spacing information, determining a time domain length corresponding to the guard period based on the first rule and subcarrier spacing, where the subcarrier spacing is determined based on the subcarrier spacing information; or
the first determining unit 1310 is further used for, in case that the first information includes time domain length information, determining a time domain length corresponding to the guard period based on the time domain length information.

In any one of the embodiments of the present application, the first rule is a mapping relationship between the time domain length and the subcarrier spacing.

In any one of the embodiments of the present application, the first determining unit 1310 is further used for, in case that the first information includes a time domain position of a given guard period, determining the time domain position of the given guard period as a time domain position of the guard period; or
the first determining unit 1310 is further used for, in case that the first information includes time domain length information, determining a time domain length corresponding to the guard period based on the time domain length information.

In any one of the embodiments of the present application, the time domain position of the guard period is any one of the following:
last M time units of a full downlink resource; or
first K time units of an uplink subband; or
P time units between a full downlink resource and an uplink subband,
where M, K and P are time domain lengths of the guard period, and M, K and P are integers greater than 0.

In any one of the embodiments of the present application, the apparatus further includes:
a first receiving unit, used for receiving scheduling information sent from a network device and used to indicate a first resource, where the first resource is used for a first data transmission; and
where the first determining unit 1310 is further used for determining, based on the guard period and the scheduling information, whether a resource conflict exists between the first resource and a resource corresponding to the guard period, and performing a first operation in case that the resource conflict exists.

In any one of the embodiments of the present application, the apparatus further includes: a first operating unit,
where the first operating unit is used for performing a first operation including any one of the following:
discarding the first data transmission;
delaying sending the first data transmission;
delaying receiving the first data transmission; or
performing rate matching on the first data transmission for the resource corresponding to the guard period.

Methods and apparatuses provided by the various embodiments of the present application are based on the same concept. Since principles of solving problems by the method for guard period determination and the apparatus for guard period determination are similar and may achieve the same effects, implementation of the apparatuses and the methods may refer to each other, and the repetitions are not repeated.

Referring to FIG. 14, FIG. 14 is a second schematic structural diagram of an apparatus for guard period determination according to an embodiment of the present application. An embodiment of the present application provides an apparatus for guard period determination, which is for use in a network device, and apparatus includes:
a second determining unit 1410, used for determining a guard period,
where the second determining unit 1410 is further used for determining first information based on the guard period; and
a second sending unit 1420, used for sending the first information to a terminal device,
where the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part (BWP).

In any one of the embodiments of the present application, the first information is used to indicate the time domain resource corresponding to the guard period based on the time domain resource corresponding to the first frequency domain unit.

In any one of the embodiments of the present application, the first frequency domain unit includes any one of the following:
a resource block (RB);
a resource block (RB) group, where the RB group is composed of multiple RBs; or
a subband.

In any one of the embodiments of the present application, the first information includes any one of the following:
RB starting position information and RB length information;
RB group starting position information and RB group length information;
bitmap information used to identify a frequency domain position; or
subband frequency domain position information.

In any one of the embodiments of the present application, the time domain resource includes a time domain length and/or a time domain position.

In any one of the embodiments of the present application, the first information includes time domain length information or subcarrier spacing information,
where the time domain length information is used to determine a time domain length corresponding to the guard period, the subcarrier spacing information is used to determine subcarrier spacing, and the subcarrier spacing is used for the terminal device to determine the time domain length corresponding to the guard period based on a first rule.

In any one of the embodiments of the present application, the first rule is a mapping relationship between the time domain length and the subcarrier spacing.

In any one of the embodiments of the present application, where the second determining unit 1410 is further used for determining a time domain position of a given guard period as a time domain position of the guard period.

In any one of the embodiments of the present application, the time domain position of the guard period includes any one of the following:
last M time units of a full downlink resource; or
first K time units of an uplink subband; or
P time units between a full downlink resource and an uplink subband,
where M, K and P are time domain lengths of the guard period, and M, K and P are integers greater than 0.

In any one of the embodiments of the present application, the second sending unit 1420 is further used for sending scheduling information to the terminal device, where the scheduling information is used to indicate a first resource; and
where the second determining unit 1410 is further used for determining whether a resource conflict exists between a first resource used for a first data transmission and a resource corresponding to the guard period, and performing a second operation in case that the resource conflict exists.

In any one of the embodiments of the present application, the apparatus further includes: a second operating unit,
where the second operating unit is used for performing a second operation including any one of the following:
discarding the first data transmission;
delaying sending the first data transmission;
delaying receiving the first data transmission; or
performing rate matching on the first data transmission for the resource corresponding to the guard period.

Methods and apparatuses provided by the various embodiments of the present application are based on the same concept. Since principles of solving problems by the method for guard period determination and the apparatus for guard period determination are similar and may achieve the same effects, implementation of the apparatuses and the methods may refer to each other, and the repetitions are not repeated.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

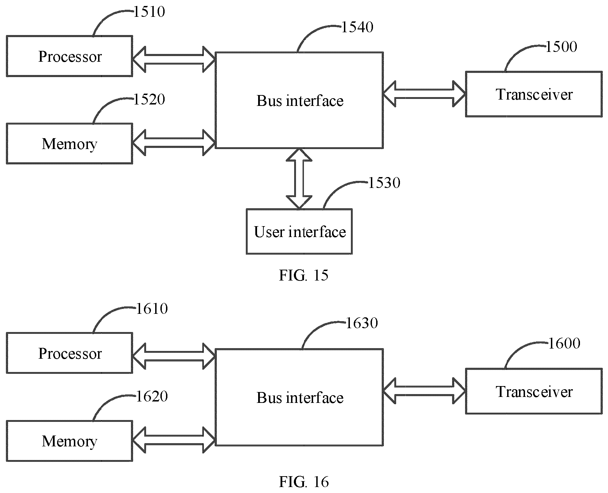

FIG. 15 is a schematic structural diagram of a terminal device according to an embodiment of the present application. As shown in FIG. 15, the terminal device includes a memory 1520, a transceiver 1500 and a processor 1510, where the processor 1510 and the memory 1520 may also be arranged physically separately.

The memory 1520 is used for storing a computer program, the transceiver 1500 is used for receiving and sending data under control of the processor 1510, and the processor 1510 calls the computer program stored in the memory 1520 to perform operations corresponding to any of the methods for guard period determination performed by a terminal device provided by the embodiments of the present application based on an obtained executable instruction, for example:
determining a guard period based on first information,
where the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part (BWP).

In any one of the embodiments of the present application, the transceiver 1500 is used for receiving and sending data under control of the processor 1510.

In FIG. 15, a bus interface 1540 may include any number of interconnected buses and bridges, which are linked together through various circuits of one or more processors represented by the processor 1510 and one or more memories represented by the memory 1520. The bus interface 1540 may also link together various other circuits, such as peripherals, voltage regulators, and power management circuits, etc., which are well known in the art, and therefore are not further described in the present application. The bus interface 1540 provides an interface. The transceiver 1500 may include multiple elements, i.e., including a transmitter and a receiver, units for providing communication with various other devices over transmission media including wireless channels, wired channels, fiber optic cables, and the like. For different terminal devices, a user interface 1530 may also be included. The user interface 1530 may also be an interface capable of externally or internally connecting the required equipment, and the connected equipment includes, but not limited to, a keypad, a display, a speaker, a microphone, a joystick, and the like.

The processor 1510 is responsible for managing a bus architecture and general processing, and the memory 1520 may store data used by the processor 1510 when performing operations.

In any one of the embodiments of the present application, the processor 1510 may be a central processing unit (CPU), an application specific integrated circuit (ASIC), a field-programmable gate array (FPGA), or a complex programmable logic device (CPLD), the processor may also use a multi-core architecture.

In any one of the embodiments of the present application, the first information is used to indicate the time domain resource corresponding to the guard period based on the time domain resource corresponding to the first frequency domain unit.

In any one of the embodiments of the present application, the first frequency domain unit includes any one of the following:
a resource block (RB);
a resource block (RB) group, where the RB group is composed of multiple RBs; or
a subband.

In any one of the embodiments of the present application, the first information includes any one of the following:
RB starting position information and RB length information;
RB group starting position information and RB group length information;
bitmap information used to identify a frequency domain position; or
subband frequency domain position information.

In any one of the embodiments of the present application, the time domain resource includes a time domain length and/or a time domain position.

In any one of the embodiments of the present application, the operations include:
in case that the first information includes a first rule and subcarrier spacing information, determining the guard period based on the first information includes: determining a time domain length corresponding to the guard period based on the first rule and subcarrier spacing, where the subcarrier spacing is determined based on the subcarrier spacing information; or
in case that the first information includes time domain length information, determining the guard period based on the first information includes: determining the time domain length corresponding to the guard period based on the time domain length information.

In any one of the embodiments of the present application, the first rule is a mapping relationship between the time domain length and the subcarrier spacing.

In any one of the embodiments of the present application, the operations include:
in case that the first information includes a time domain position of a given guard period, determining the guard period based on the first information includes: determining a time domain position of the given guard period as a time domain position of the guard period; or
in case that the first information includes time domain position information, determining the guard period based on the first information includes: determining a time domain position indicated by the time domain position information as a time domain position of the guard period.

In any one of the embodiments of the present application, the time domain position of the guard period is any one of the following:
last M time units of a full downlink resource; or
first K time units of an uplink subband; or
P time units between a full downlink resource and an uplink subband,
where M, K and P are time domain lengths of the guard period, and M, K and P are integers greater than 0.

In any one of the embodiments of the present application, the operations further include:
receiving scheduling information sent from a network device and used to indicate a first resource, where the first resource is used for a first data transmission; and
determining, based on the guard period and the scheduling information, whether a resource conflict exists between the first resource and a resource corresponding to the guard period, and performing a first operation in case that the resource conflict exists.

In any one of the embodiments of the present application, the first operation includes any one of the following:
discarding the first data transmission;
delaying sending the first data transmission;
delaying receiving the first data transmission; or
performing rate matching on the first data transmission for the resource corresponding to the guard period.

The above-mentioned terminal device provided by the embodiments of the present application may implement all the method steps implemented by the above method embodiments for guard period determination, and may achieve the same effects. The same parts and beneficial effects as the same method embodiments are not repeated in the present application.

FIG. 16 is a schematic structural diagram of a network device according to an embodiment of the present application. As shown in FIG. 16, the network device includes a memory 1620, a transceiver 1600 and a processor 1610.

The memory 1620 is used for storing a computer program, the transceiver 1600 is used for receiving and sending data under control of the processor 1610, and the processor 1610 is used for reading the computer program in the memory 1620 and performing the following operations:
determining a guard period;
determining first information based on the guard period; and
sending the first information to a terminal device,
where the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part (BWP).

In any one of the embodiments of the present application, the transceiver 1600 is used for receiving and sending data under the control of the processor 1610.

In FIG. 16, a bus architecture may include any number of interconnected buses and bridges, which are linked together through various circuits of one or more processors represented by the processor 1610 and one or more memories represented by the memory 1620. The bus architecture may also link together various other circuits, such as peripherals, voltage regulators, and power management circuits, etc., which are well known in the art, and therefore are not further described in the present application. A bus interface 1630 provides an interface. The transceiver 1600 may include multiple elements, i.e., including a transmitter and a receiver, units for providing communication with various other devices over transmission media including wireless channels, wired channels, fiber optic cables, and the like. The processor 1610 is responsible for managing the bus architecture and general processing, and the memory 1620 may store data used by the processor 1610 when performing operations.

The processor 1610 may be a central processing unit (CPU), an application specific integrated circuit (ASIC), a field-programmable gate array (FPGA), or a complex programmable logic device (CPLD), the processor may also use a multi-core architecture.

In any one of the embodiments of the present application, the first information is used to indicate the time domain resource corresponding to the guard period based on the time domain resource corresponding to the first frequency domain unit.

In any one of the embodiments of the present application, the first frequency domain unit includes any one of the following:
a resource block (RB);
a resource block (RB) group, where the RB group is composed of multiple RBs; or
a subband.

In any one of the embodiments of the present application, the first information includes any one of the following:
RB starting position information and RB length information;
RB group starting position information and RB group length information;
bitmap information used to identify a frequency domain position; or
subband frequency domain position information.

In any one of the embodiments of the present application, the time domain resource includes a time domain length and/or a time domain position.

In any one of the embodiments of the present application, the first information includes time domain length information or subcarrier spacing information,
where the time domain length information is used to determine a time domain length corresponding to the guard period, the subcarrier spacing information is used to determine subcarrier spacing, and the subcarrier spacing is used for the terminal device to determine the time domain length corresponding to the guard period based on a first rule.

In any one of the embodiments of the present application, the first rule is a mapping relationship between the time domain length and the subcarrier spacing.

In any one of the embodiments of the present application, determining the guard period includes:
determining a time domain position of a given guard period as a time domain position of the guard period.

In any one of the embodiments of the present application, the time domain position of the guard period includes any one of the following:
last M time units of a full downlink resource; or
first K time units of an uplink subband; or
P time units between a full downlink resource and an uplink subband,
where M, K and P are time domain lengths of the guard period, and M, K and P are integers greater than 0.

In any one of the embodiments of the present application, the operations further include:
determining whether a resource conflict exists between a first resource used for a first data transmission and a resource corresponding to the guard period, and performing a second operation in case that the resource conflict exists.

In any one of the embodiments of the present application, the second operation includes:
discarding the first data transmission;
delaying sending the first data transmission;
delaying receiving the first data transmission; or
performing rate matching on the first data transmission for the resource corresponding to the guard period.

The above-mentioned network device provided by the embodiments of the present application may implement all the method steps implemented by the above method embodiments for guard period determination, and may achieve the same effects. The same parts and beneficial effects as the same method embodiments are not repeated in the present application.

An embodiment of the present application further provides a processor-readable storage medium, where the processor-readable storage medium stores a computer program, and the computer program is used to cause a processor to perform the method for guard period determination performed by a terminal device provided by the above embodiments, including:
determining a guard period based on first information,
where the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part (BWP).

In any one of the embodiments of the present application, the first information is used to indicate a time domain resource corresponding to the guard period based on the time domain resource corresponding to the first frequency domain unit.

In any one of the embodiments of the present application, the first frequency domain unit includes any one of the following:
a resource block (RB);
a resource block (RB) group, where the RB group is composed of multiple RBs; or
a subband.

In any one of the embodiments of the present application, the first information includes any one of the following:
RB starting position information and RB length information;
RB group starting position information and RB group length information;
bitmap information used to identify a frequency domain position; or
subband frequency domain position information.

In any one of the embodiments of the present application, the time domain resource includes a time domain length and/or a time domain position.

In any one of the embodiments of the present application, the method includes:
in case that the first information includes a first rule and subcarrier spacing information, determining the guard period based on the first information includes: determining a time domain length corresponding to the guard period based on the first rule and subcarrier spacing, where the subcarrier spacing is determined based on the subcarrier spacing information; or
in case that the first information includes time domain length information, determining the guard period based on the first information includes: determining a time domain length corresponding to the guard period based on the time domain length information.

In any one of the embodiments of the present application, the first rule is a mapping relationship between the time domain length and the subcarrier spacing.

In any one of the embodiments of the present application, the method includes:
in case that the first information includes a time domain position of a given guard period, determining the guard period based on the first information includes: determining the time domain position of the given guard period as a time domain position of the guard period; or
in case that the first information includes time domain position information, determining the guard period based on the first information includes: determining a time domain position indicated by the time domain position information as a time domain position of the guard period.

In any one of the embodiments of the present application, the time domain position of the guard period is any one of the following:
last M time units of a full downlink resource; or
first K time units of an uplink subband; or
P time units between a full downlink resource and an uplink subband,
where M, K and P are time domain lengths of the guard period, and M, K and P are integers greater than 0.

In any one of the embodiments of the present application, the method further includes:
receiving scheduling information sent from a network device and used to indicate a first resource, where the first resource is used for a first data transmission; and
determining, based on the guard period and the scheduling information, whether a resource conflict exists between the first resource and a resource corresponding to the guard period, and performing a first operation in case that the resource conflict exists.

In any one of the embodiments of the present application, the first operation includes any one of the following:
discarding the first data transmission;
delaying sending the first data transmission;
delaying receiving the first data transmission; or
performing rate matching on the first data transmission for the resource corresponding to the guard period.

An embodiment of the present application further provides a processor-readable storage medium, where the processor-readable storage medium stores a computer program, and the computer program is used to cause a processor to perform the method for guard period determination performed by a network device provided by the above embodiments, including:
determining a guard period;
determining first information based on the guard period; and
sending the first information to a terminal device,
where the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part (BWP).

In any one of the embodiments of the present application, the first information is used to indicate the time domain resource corresponding to the guard period based on the time domain resource corresponding to the first frequency domain unit.

In any one of the embodiments of the present application, the first frequency domain unit includes any one of the following:
a resource block (RB);
a resource block (RB) group, where the RB group is composed of multiple RBs; or
a subband.

In any one of the embodiments of the present application, the first information includes any one of the following:
RB starting position information and RB length information;
RB group starting position information and RB group length information;
bitmap information used to identify a frequency domain position; or
subband frequency domain position information.

In any one of the embodiments of the present application, the time domain resource includes a time domain length and/or a time domain position.

In any one of the embodiments of the present application, the first information includes time domain length information or subcarrier spacing information,
where the time domain length information is used to determine a time domain length corresponding to the guard period, the subcarrier spacing information is used to determine subcarrier spacing, and the subcarrier spacing is used for the terminal device to determine the time domain length corresponding to the guard period based on a first rule.

In any one of the embodiments of the present application, the first rule is a mapping relationship between the time domain length and the subcarrier spacing.

In any one of the embodiments of the present application, determining the guard period includes:
determining a time domain position of a given guard period as a time domain position of the guard period.

In any one of the embodiments of the present application, the time domain position of the guard period includes any one of the following:
last M time units of a full downlink resource; or
first K time units of an uplink subband; or
P time units between a full downlink resource and an uplink subband,
where M, K and P are time domain lengths of the guard period, and M, K and P are integers greater than 0.

In any one of the embodiments of the present application, the method further includes:
determining whether a resource conflict exists between a first resource used for a first data transmission and a resource corresponding to the guard period, and performing a second operation in case that the resource conflict exists.

In any one of the embodiments of the present application, the second operation includes:
discarding the first data transmission;
delaying sending the first data transmission;
delaying receiving the first data transmission; or
performing rate matching on the first data transmission for the resource corresponding to the guard period.

The processor-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for guard period determination, performed by a terminal device, comprising:
determining a guard period based on first information,
wherein the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part, BWP.

2. The method of claim 1, wherein the first information is used to indicate the time domain resource corresponding to the guard period based on the time domain resource corresponding to the first frequency domain unit.

3. The method of claim 1 or 2, wherein the first frequency domain unit comprises any one of the following:
a resource block, RB;
a resource block, RB, group, wherein the RB group is composed of multiple RBs; or
a subband.

4. The method of claim 3, wherein the first information comprises any one of the following:
RB starting position information and RB length information;
RB group starting position information and RB group length information;
bitmap information used to identify a frequency domain position; or
subband frequency domain position information.

5. The method of claim 1 or 2, wherein the time domain resource comprises a time domain length and/or a time domain position.

6. The method of claim 5, further comprising:
in case that the first information comprises a first rule and subcarrier spacing information, determining the guard period based on the first information comprises: determining a time domain length corresponding to the guard period based on the first rule and subcarrier spacing, wherein the subcarrier spacing is determined based on the subcarrier spacing information; or
in case that the first information comprises time domain length information, determining the guard period based on the first information comprises: determining a time domain length corresponding to the guard period based on the time domain length information.

7. The method of claim 6, wherein the first rule is a mapping relationship between the time domain length and the subcarrier spacing.

8. The method of claim 5, further comprising:
in case that the first information comprises a time domain position of a given guard period, determining the guard period based on the first information comprises: determining the time domain position of the given guard period as a time domain position of the guard period; or
in case that the first information comprises time domain position information, determining the guard period based on the first information comprises: determining a time domain position indicated by the time domain position information as a time domain position of the guard period.

9. The method of claim 8, wherein the time domain position of the guard period is any one of the following:
last M time units of a full downlink resource; or
first K time units of an uplink subband; or
P time units between a full downlink resource and an uplink subband,
wherein M, K and P are time domain lengths of the guard period, and M, K and P are integers greater than 0.

10. The method of claim 1 or 2, further comprising:
receiving scheduling information sent from a network device and used to indicate a first resource, wherein the first resource is used for a first data transmission; and
determining, based on the guard period and the scheduling information, whether a resource conflict exists between the first resource and a resource corresponding to the guard period, and performing a first operation in case that the resource conflict exists.

11. The method of claim 10, wherein the first operation comprises any one of the following:
discarding the first data transmission;
delaying sending the first data transmission;
delaying receiving the first data transmission; or
performing rate matching on the first data transmission for the resource corresponding to the guard period.

12. A method for guard period determination, performed by a network device, comprising:
determining a guard period;
determining first information based on the guard period; and
sending the first information to a terminal device,
wherein the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part, BWP.

13. The method of claim 12, wherein the first information is used to indicate the time domain resource corresponding to the guard period based on the time domain resource corresponding to the first frequency domain unit.

14. The method of claim 12 or 13, wherein the first frequency domain unit comprises any one of the following:
a resource block, RB;
a resource block, RB, group, wherein the RB group is composed of multiple RBs; or
a subband.

15. The method of claim 14, wherein the first information comprises any one of the following:
RB starting position information and RB length information;
RB group starting position information and RB group length information;
bitmap information used to identify a frequency domain position; or
subband frequency domain position information.

16. The method of claim 12 or 13, wherein the time domain resource comprises a time domain length and/or a time domain position.

17. The method of claim 16, wherein the first information comprises time domain length information or subcarrier spacing information,
wherein the time domain length information is used to determine a time domain length corresponding to the guard period, the subcarrier spacing information is used to determine subcarrier spacing, and the subcarrier spacing is used for the terminal device to determine the time domain length corresponding to the guard period based on a first rule.

18. The method of claim 17, wherein the first rule is a mapping relationship between the time domain length and the subcarrier spacing.

19. The method of claim 12, wherein determining the guard period comprises:
determining a time domain position of a given guard period as a time domain position of the guard period.

20. The method of claim 16, wherein the time domain position of the guard period comprises any one of the following:
last M time units of a full downlink resource; or
first K time units of an uplink subband; or
P time units between a full downlink resource and an uplink subband,
wherein M, K and P are time domain lengths of the guard period, and M, K and P are integers greater than 0.

21. The method of claim 12 or 13, further comprising:
determining whether a resource conflict exists between a first resource used for a first data transmission and a resource corresponding to the guard period, and performing a second operation in case that the resource conflict exists.

22. The method of claim 21, wherein the second operation comprises:
discarding the first data transmission;
delaying sending the first data transmission;
delaying receiving the first data transmission; or
performing rate matching on the first data transmission for the resource corresponding to the guard period.

23. A terminal device, comprising a memory, a transceiver and a processor,
wherein the memory is used for storing a computer program, the transceiver is used for receiving and sending data under control of the processor, and the processor is used for reading the computer program in the memory and performing the following operations:
determining a guard period based on first information,
wherein the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part, BWP.

24. The terminal device of claim 23, wherein the first information is used to indicate the time domain resource corresponding to the guard period based on the time domain resource corresponding to the first frequency domain unit.

25. The terminal device of claim 23 or 24, wherein the first frequency domain unit comprises any one of the following:
a resource block, RB;
a resource block, RB, group, wherein the RB group is composed of multiple RBs; or
a subband.

26. The terminal device of claim 25, wherein the first information comprises any one of the following:
RB starting position information and RB length information;
RB group starting position information and RB group length information;
bitmap information used to identify a frequency domain position; or
subband frequency domain position information.

27. The terminal device of claim 23 or 24, wherein the time domain resource comprises a time domain length and/or a time domain position.

28. The terminal device of claim 27, wherein the operations comprise:
in case that the first information comprises a first rule and subcarrier spacing information, determining the guard period based on the first information comprises: determining a time domain length corresponding to the guard period based on the first rule and subcarrier spacing, wherein the subcarrier spacing is determined based on the subcarrier spacing information; or
in case that the first information comprises time domain length information, determining the guard period based on the first information comprises: determining a time domain length corresponding to the guard period based on the time domain length information.

29. The terminal device of claim 28, wherein the first rule is a mapping relationship between the time domain length and the subcarrier spacing.

30. The terminal device of claim 27, wherein the operations comprise:
in case that the first information comprises a time domain position of a given guard period, determining the guard period based on the first information comprises: determining the time domain position of the given guard period as a time domain position of the guard period; or
in case that the first information comprises time domain position information, determining the guard period based on the first information comprises: determining a time domain position indicated by the time domain position information as a time domain position of the guard period.

31. The terminal device of claim 30, wherein the time domain position of the guard period is any one of the following:
last M time units of a full downlink resource; or
first K time units of an uplink subband; or
P time units between a full downlink resource and an uplink subband,
wherein M, K and P are time domain lengths of the guard period, and M, K and P are integers greater than 0.

32. The terminal device of claim 23 or 24, wherein the operations further comprise:
receiving scheduling information sent from a network device and used to indicate a first resource, wherein the first resource is used for a first data transmission; and
determining, based on the guard period and the scheduling information, whether a resource conflict exists between the first resource and a resource corresponding to the guard period, and performing a first operation in case that the resource conflict exists.

33. The terminal device of claim 32, wherein the first operation comprises any one of the following:
discarding the first data transmission;
delaying sending the first data transmission;
delaying receiving the first data transmission; or
performing rate matching on the first data transmission for the resource corresponding to the guard period.

34. A network device, comprising a memory, a transceiver and a processor,
wherein the memory is used for storing a computer program, the transceiver is used for receiving and sending data under control of the processor, and the processor is used for reading the computer program in the memory and performing the following operations:
determining a guard period;
determining first information based on the guard period; and
sending the first information to a terminal device,
wherein the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part, BWP.

35. The network device of claim 34, wherein the first information is used to indicate the time domain resource corresponding to the guard period based on the time domain resource corresponding to the first frequency domain unit.

36. The network device of claim 34 or 35, wherein the first frequency domain unit comprises any one of the following:
a resource block, RB;
a resource block, RB, group, wherein the RB group is composed of multiple RBs; or
a subband.

37. The network device of claim 36, wherein the first information comprises any one of the following:
RB starting position information and RB length information;
RB group starting position information and RB group length information;
bitmap information used to identify a frequency domain position; or
subband frequency domain position information.

38. The network device of claim 34 or 35, wherein the time domain resource comprises a time domain length and/or a time domain position.

39. The network device of claim 38, wherein the first information comprises time domain length information or subcarrier spacing information,
wherein the time domain length information is used to determine a time domain length corresponding to the guard period, the subcarrier spacing information is used to determine subcarrier spacing, and the subcarrier spacing is used for the terminal device to determine the time domain length corresponding to the guard period based on a first rule.

40. The network device of claim 39, wherein the first rule is a mapping relationship between the time domain length and the subcarrier spacing.

41. The network device of claim 34, wherein determining the guard period comprises:
determining a time domain position of a given guard period as a time domain position of the guard period.

42. The network device of claim 38, wherein the time domain position of the guard period comprises any one of the following:
last M time units of a full downlink resource; or
first K time units of an uplink subband; or
P time units between a full downlink resource and an uplink subband,
wherein M, K and P are time domain lengths of the guard period, and M, K and P are integers greater than 0.

43. The network device of claim 34 or 35, wherein the operations further comprise:
determining whether a resource conflict exists between a first resource used for a first data transmission and a resource corresponding to the guard period, and performing a second operation in case that the resource conflict exists.

44. The network device of claim 43, wherein the second operation comprises:
discarding the first data transmission;
delaying sending the first data transmission;
delaying receiving the first data transmission; or
performing rate matching on the first data transmission for the resource corresponding to the guard period.

45. An apparatus for guard period determination, for use in a terminal device, comprising:
a first determining unit, used for determining a guard period based on first information,
wherein the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part, BWP.

46. The apparatus of claim 45, wherein the first information is used to indicate the time domain resource corresponding to the guard period based on the time domain resource corresponding to the first frequency domain unit.

47. The apparatus of claim 45 or 46, wherein the first frequency domain unit comprises any one of the following:
a resource block, RB;
a resource block, RB, group, wherein the RB group is composed of multiple RBs; or
a subband.

48. The apparatus of claim 47, wherein the first information comprises any one of the following:
RB starting position information and RB length information;
RB group starting position information and RB group length information;
bitmap information used to identify a frequency domain position; or
subband frequency domain position information.

49. The apparatus of claim 45 or 46, wherein the time domain resource comprises a time domain length and/or a time domain position.

50. The apparatus of claim 49, wherein the first determining unit is further used for, in case that the first information comprises a first rule and subcarrier spacing information, determining a time domain length corresponding to the guard period based on the first rule and subcarrier spacing, wherein the subcarrier spacing is determined based on the subcarrier spacing information; or
the first determining unit is further used for, in case that the first information comprises time domain length information, determining a time domain length corresponding to the guard period based on the time domain length information.

51. The apparatus of claim 50, wherein the first rule is a mapping relationship between the time domain length and the subcarrier spacing.

52. The apparatus of claim 49, wherein the first determining unit is further used for, in case that the first information comprises a time domain position of a given guard period, determining the time domain position of the given guard period as a time domain position of the guard period; or
the first determining unit is further used for, in case that the first information comprises time domain position information, determining a time domain position indicated by the time domain position information as a time domain position of the guard period.

53. The apparatus of claim 52, wherein the time domain position of the guard period is any one of the following:
last M time units of a full downlink resource; or
first K time units of an uplink subband; or
P time units between a full downlink resource and an uplink subband,
wherein M, K and P are time domain lengths of the guard period, and M, K and P are integers greater than 0.

54. The apparatus of claim 45 or 46, further comprising:
a first receiving unit, used for receiving scheduling information sent from a network device and used to indicate a first resource, wherein the first resource is used for a first data transmission; and
wherein the first determining unit is further used for determining, based on the guard period and the scheduling information, whether a resource conflict exists between the first resource and a resource corresponding to the guard period, and performing a first operation in case that the resource conflict exists.

55. The apparatus of claim 54, further comprising: a first operating unit,
wherein the first operating unit is used for performing a first operation comprising any one of the following:
discarding the first data transmission;
delaying sending the first data transmission;
delaying receiving the first data transmission; or
performing rate matching on the first data transmission for the resource corresponding to the guard period.

56. An apparatus for guard period determination, for use in a network device, comprising:
a second determining unit, used for determining a guard period,
wherein the second determining unit is further used for determining first information based on the guard period; and
a second sending unit, used for sending the first information to a terminal device,
wherein the first information is used to indicate a frequency domain resource corresponding to the guard period based on a first frequency domain unit and/or to indicate a time domain resource corresponding to the guard period based on a first frequency domain unit, and a frequency domain width of the first frequency domain unit is smaller than a frequency domain width of a bandwidth part, BWP.

57. The apparatus of claim 56, wherein the first information is used to indicate the time domain resource corresponding to the guard period based on the time domain resource corresponding to the first frequency domain unit.

58. The apparatus of claim 56 or 57, wherein the first frequency domain unit comprises any one of the following:
a resource block, RB;
a resource block, RB, group, wherein the RB group is composed of multiple RBs; or
a subband.

59. The apparatus of claim 58, wherein the first information comprises any one of the following:
RB starting position information and RB length information;
RB group starting position information and RB group length information;
bitmap information used to identify a frequency domain position; or
subband frequency domain position information.

60. The apparatus of claim 56 or 57, wherein the time domain resource comprises a time domain length and/or a time domain position.

61. The apparatus of claim 60, wherein the first information comprises time domain length information or subcarrier spacing information,
wherein the time domain length information is used to determine a time domain length corresponding to the guard period, the subcarrier spacing information is used to determine subcarrier spacing, and the subcarrier spacing is used for the terminal device to determine the time domain length corresponding to the guard period based on a first rule.

62. The apparatus of claim 61, wherein the first rule is a mapping relationship between the time domain length and the subcarrier spacing.

63. The apparatus of claim 56, wherein the second determining unit is further used for determining a time domain position of a given guard period as a time domain position of the guard period.

64. The apparatus of claim 60, wherein the time domain position of the guard period comprises any one of the following:
last M time units of a full downlink resource; or
first K time units of an uplink subband; or
P time units between a full downlink resource and an uplink subband,
wherein M, K and P are time domain lengths of the guard period, and M, K and P are integers greater than 0.

65. The apparatus of claim 56 or 57, wherein the second sending unit is further used for sending scheduling information to the terminal device, wherein the scheduling information is used to indicate a first resource; and
wherein the second determining unit is further used for determining whether a resource conflict exists between a first resource used for a first data transmission and a resource corresponding to the guard period, and performing a second operation in case that the resource conflict exists.

66. The apparatus of claim 65, further comprising: a second operation unit,
wherein the second operating unit is used for performing a second operation comprising any one of the following:
discarding the first data transmission;
delaying sending the first data transmission;
delaying receiving the first data transmission; or
performing rate matching on the first data transmission for the resource corresponding to the guard period.

67. A processor-readable storage medium, wherein the processor-readable storage medium stores a computer program, and the computer program is used to cause a processor to perform the method for guard period determination of any one of claims 1 to 11 or the method of any one of claims 12 to 22.
